# EUROPEAN PATENT SPECIFICATION

(11) **EP 4 409 484 B1**
(45) Date of publication and mention of the grant of the patent: **20.08.2025**
(21) Application number: 22797742.8
(22) Date of filing: 29.09.2022
(51) Int. Cl.: G06Q 10/04, G06Q 40/08, G06Q 30/02, G06Q 50/16, G06T 7/00, G06T 7/90

(54) **AERIAL AND/OR SATELLITE IMAGERY-BASED, OPTICAL SENSORY SYSTEM AND METHOD FOR QUANTITATIVE MEASUREMENTS AND RECOGNITION OF PROPERTY DAMAGE AFTER AN OCCURRED NATURAL CATASTROPHE EVENT**
LUFT- UND/ODER SATELLITENBILDBASIERTES OPTISCHES SENSORSYSTEM UND VERFAHREN ZUR QUANTITATIVEN MESSUNG UND ERKENNUNG VON EIGENSCHAFTSSCHÄDEN NACH EINEM AUFTRETENDEN NATÜRLICHEN KATASTROPHENEREIGNIS
SYSTÈME SENSORIEL OPTIQUE BASÉ SUR UNE IMAGERIE AÉRIENNE ET/OU PAR SATELLITE ET PROCÉDÉ DE MESURES QUANTITATIVES ET DE RECONNAISSANCE DE DOMMAGES AFFECTANT DES BIENS APRÈS UN ÉVÉNEMENT DE CATASTROPHE NATURELLE

(30) Priority: 29.09.2021 CH 0703322021
(43) Date of publication of application: 07.08.2024
(73) Proprietor: Swiss Reinsurance Company Ltd., 8022 Zürich (CH)
(72) Inventor: SCHENKEL, David, 8180 Bülach (CH); SRINIVASAN, Venkatesh, Chennai, 600042 (IN); SAHA, Samyadeep, Ghaziabad Uttar Pradesh 201010 (IN); MISHRA, Abhishek, Newington, Connecticut 06111 (US)
(74) Representative: Leimgruber, Fabian Alfred Rupert
(86) International application number: PCT/EP2022/077235
(87) International publication number: WO 2023/052570

(56) References cited:
- US-A1- 2014 245 210
- US-B1- 10 354 386
- US-B1- 10 896 468

## Description

### Field of the Invention

The present invention relates to the field of automatedly measuring and/or assessing property damage in an area affected by a natural catastrophe event. Particularly, the present invention relates to the field of automated risk-measuring systems and associated digital platforms providing precise assessment of natural catastrophic events and physical impacts on a physical object and property, respectively. Further, the present invention relates to technical improvements to leverage computer vision/ deep learning/ artificial intelligence on actual post catastrophe satellite and aerial imagery to detect and measure different types of damage on properties, as e.g. roofs or other property structures. The aerial or satellite imagery can explicitly be taken by airborne and/or spaceborne optical sensing devices, as digital imagery based cameras placed in or at manned/ unmanned aircrafts or drones and/or satellites or spacecrafts. In general, the present invention relates to forecast, predictive and/or optical measuring and/or imagery recognition systems for measuring values taken by defined or otherwise selected measuring parameters of the property and/or the natural catastrophe event, and to digital systems and methods for impact forecasting to support emergency management of natural hazards.

### Background of the Invention

Automated forecasting and early warning systems are important technical means to protect lives, properties, and livelihood. The same is true for systems for quantitative measurements and assessments, and further automated precise recognition and classification of physical damages to objects. While early warning systems are frequently used to predict the magnitude, location, and timing of potentially damaging events, these systems rarely provide predictive and quantified impact measures and/or estimates, such as the expected amount and distribution of physical damage, human consequences, disruption of services, or financial loss. Complementing early warning systems with impact forecasts has a twofold advantage: It is able to provide decision makers with more accurate information to take suitable and dedicated decisions about emergency measures and focus the attention of different disciplines on a common target. This also allows capitalizing on synergies between different disciplines and boosting the technical development of multi-hazard early warning systems. The present invention adds the value of impact-based warnings and damage assessment compared to hazard forecasting for the emergency phase, allowing to cope with the technical challenges and to overcome the technical pitfalls of the prior art systems regarding impact forecasting for a wide range of natural hazards.

The technical demand for such automated measuring and forecasting systems is obvious: Over the last decade, relevant natural loss events worldwide caused on average economic losses in excess of USD 190 billion per year and displaced an average of 24 million people each year. Among the global risks, extreme weather events and geophysical phenomena such as damaging earthquakes and tsunamis are perceived as the top first and third risks in terms of likelihood and as the top third and fifth risks in terms of impact. Urbanization, population growth, increasing interconnectivity, and interdependence of critical infrastructure are expected to further aggravate the risks imposed by natural hazards. Climate change is also acting as a major driver and amplifier of the losses related to hydrometeorological events. Both heat waves and droughts will become more frequent and are expected to persist over longer time periods under climate change. Similarly, climate-driven increases in river, urban and coastal flooding are a global problem, affecting mainly developing countries and also industrialized regions.

Technical-based forecasting, early warning and the provision of rapid disaster risk information are cornerstones of disaster risk reduction. This was also recognized by the United Nations (UN). For example, the UN Sendai Framework for Disaster Risk Reduction calls for a substantial increase in the availability of precise multi-hazard early warning systems and rapid disaster risk data by 2030 (United Nations International Strategy for Disaster Reduction [UNISDR]), which directly shows the technical need for such forecasting and assessment systems. In the state of the art, forecast and warning have focused on physical event characteristics, such as magnitude, spatial extent, and duration of the impending event. Though, the provision of robust measuring data on the potential event impacts, such as predicted number and location of affected people, damage to buildings and infrastructure, or disruption of services, has gained attention, there is still a need for such technical systems enabled to cope with these requirements. In general, such systems require considering additional information on exposure, that is, people, property, or other elements present in hazard zones, and on vulnerability, depending on the characteristics of the exposed communities, systems, or assets that make them susceptible to the damaging effects of a hazard. Thus, impact forecasting and warning systems are an emerging and important topic in the technical field of measuring and forecasting systems, i.e. for developing forecasting technology, and at the level of institutions responsible for natural hazards management. For instance, the World Meteorological Organization (WMO) has launched in 2015 a program on multi-hazard impact-based forecast and warning systems. This program aims to assist WMO members to further develop forecast and warning systems tailored to the needs of users to fully perceive and understand the consequences of severe weather events and, as a consequence, to undertake appropriate mitigating actions.

The document CN 109408965 A for example discloses a platform estimating the risk of loss for a location in the context of earthquakes. The invention provides an analysis method for assessing building damages using a house earthquake damage matrix curve based on earthquake motion parameters. Based on the corresponding relationship between the intensity and the seismic oscillation parameters, a maximum likelihood estimation is adopted. A house vulnerability matrix or a damage ratio result of actual earthquake damage statistics is converted into a dual-parameter vulnerability curve to overcome a possible defect based on the vulnerability curve. On the basis of the relationship between the intensity and the seismic oscillation parameters, seismic vulnerability curve characteristic parameters of various house structures are given, and basic data are provided for house building seismic damage assessment based on the seismic oscillation parameters.

Starting from the state of the art, there is a need in automated and robust forecasting and assessment of impacts of hazardous events for a wide range of geophysical and weather-/climate-related natural hazards. This technical need does not only concern forecasting as the provision of timely information to improve the management in the emergency phase, that is, shortly before, during and after a hazardous event, but also medium- and long-term risk and probabilities measurements and/or assessments that, for example, are carried out as expert systems or emergency signaling systems to assist decision makers in risk prevention and mitigation activities. To technically cover the whole range, such systems should be enabled of impact forecasting and assessment (as a basis for impact-based warnings) and simultaneously of hazard forecasting and assessment (hazard-based warning), indicate challenges and pitfalls, and synthesize the review results across hazard types. One further deficiency of the prior art systems in impact forecasting and risk-assessment is, that they are very different across hazard types and disciplines, which makes a stringent analysis impossible. As forecasting and assessment technology are typically advanced within specific disciplinary contexts, they are not able to forecast and measure across different hazard types rendering impossible transferring information and knowledge and harmonizing concepts across discipline borders and bridging gaps between different technological approaches.

In the prior art, the document US10896468B1 discloses a system for processing overhead imagery using telemetry data received from unmanned aerial vehicles. In particular, the system accesses aerial images including a property, determines an owner of the property, determines whether the owner of the property is eligible to be a member of a financial institution, determines whether the owner of the property has property insurance, and presents an offer for insurance to insure the property in the aerial image. Further, the system can determine damage estimates, and reserves resources to repair the properties based on the damage estimates. The document US10354386B1 shows a system using unmanned vehicles (terrestrial, aerial, nautical, or multi-mode) to survey a property in response to or in anticipation of damage to an object. The system allows determining damage information associated with structures (objects) in aerial images obtained by the unmanned vehicles, or other source. The damage information includes intensity of damage of a structure in an image. Finally, the document US2014245210A1 discloses a system for providing a damage assessment report. A geographic area potentially affected by an event is identified with objects in the geographic area. An aerial image of the objects is displayed via an interactive graphic display. An option to select a specific object in the aerial image is provided. Finally, a damage assessment report for the given object is provided, wherein the damage assessment report includes image data from an aerial vehicle, and a damage characteristic for the selected object based on the image data, the damage characteristic identifying potential damage to the given object based on the event.

### Summary of the Invention

It is one object of the present invention to provide an automatable, sensory-based system and a method for measuring and assessing property damage in case of a natural catastrophe event impact, which allows for a fast forecast and analysis of the risk of property damage, efficient damage claim handling, quantified impact measures or estimates, enables damage assessment across different hazard types and assists in harmonizing damage responses across different disciplines and organizations. Further, it is an object of the present invention to provide an automatable, sensory-based system and a method for impact measure forecasting and prediction to support emergency management of natural hazards by combining precise and automated impact-based forecasting with hazard forecasting e.g. for the emergency phase and/or for appropriate and accurate conduct of automated risk-transfer. The sensory-based system and method for forecasting and early warning should be able to predict the magnitude, location, and timing of potentially damaging events, and additionally measure or assess quantified impact measures, such as the expected physical damage, human impacts, impacts by disruption of services, or impacts for financial loss. The digital system and method should be able to measure the effects across a wide range of natural hazards. Further, it should be able to operate as a digital expert system outlining opportunities and key challenges based on the impact forecasting measurements.

According to the present invention, these objects and other objects that will become apparent in the following description are achieved with a digital system and a method for assessing property damage measures and/or estimates in case of a natural catastrophe event comprising the features of the independent claims. In addition, further advantageous embodiments and variants can be derived from the dependent claims and the related descriptions.

According to the present invention, the above-mentioned objects for a aerial and/or satellite imagery-based, optical sensory system for measuring physical impacts to land-based objects and/or structures are achieved, particularly, by measuring impact measurands in case of an occurrence of a natural catastrophe event, the natural catastrophe event impacting the land-based objects and/or structures causing a physical damage to the land-based objects and/or structures, in that the aerial and/or satellite imagery-based, optical system comprise one or more airborne and/or spaceborne optical remote sensing devices equipped with one or more optical remote sensors being within a frequency band/wavelength range at least comprising infrared to visible multi-spectral sensors and/or synthetic aperture radar and/or hyperspectral sensors for capturing digital aerial and/or satellite imagery of a geographic area affected by the natural catastrophe event and transmitting the digital aerial and/or satellite imagery to a digital ground system, in that the digital ground system comprises a core engine for generating a digital natural catastrophe event footprint of the natural catastrophe event based on the captured digital aerial and/or satellite imagery, the natural catastrophe event footprint at least comprising a topographical map of the natural catastrophe event, in that the digital ground system comprises a data transmission interface for receiving location parameter values defining selected land-based objects and/or structures located in or near the area affected by the natural catastrophe event, in that the digital ground system comprises an object filter for matching the received location parameter values of each land-based objects and/or structure to the generated topographical map, wherein land-based objects and/or structure are identified and filtered lying in the area affected by the natural catastrophe event, if the received location parameter values of a land-based objects and/or structure are detected to be in a geographic parameter value range of the affected area of the topographical map, and in that the core engine comprises an adaptive vulnerability curve structure for parametrizing impact measurands for the land-based objects and/or structures per event intensity based on the measured topographical map, and for generating an impact measurand value for each of one or more of the land-based objects and/or structures based on an event intensity measured based on the natural catastrophe event footprint using the vulnerability curve structure. The land-based objects and/or structures can e.g. comprise any property as buildings, service constructions, agricultural land or other assets exposed to natural events. These can be for example private housing properties, company or government facilities, energy services, water supply services, infrastructure constructions, crop fields, pastures and the like. A physical damage can be defined as any reduction in value or loss of return; for example a physical damage to a land-based object and/or structure, e.g. a building or construction, can be a direct damage resulting from the hazardous impact to the property, however, may also comprise indirect damage for example resulting from a breakdown of services provided with or at the property. The damage assessment according to the invention provides reliable, optical sensory-based property damage measures, which for example can also be used to index/measure a risk of loss or value reduction of assets or service, costs for a need of using alternative services, costs for remediation measures, compensations of third parties, etc. In general, the land-based objects and/or structures and/or formations can e.g. at least comprise building structures and/or agricultural structures and/or artificial landscape formations as water training systems, dams, or artificial terraces for agriculture or industrial purposes. The natural catastrophe event can e.g. at least comprise a flood event and/or hurricane event and/or a fire event and/or an earthquake event and/or a drought event and/or seismic sea wave / tsunami event and/or costal erosion event and/or volcanic eruption event, the natural catastrophe event footprint at least comprises a flood event footprint and/or a hurricane event footprint and/or a fire event footprint and/or an earthquake event footprint and/or a drought event footprint and/or seismic sea wave / tsunami event and/or costal erosion event and/or volcanic eruption event.

In an embodiment variant, a quantified loss measure value can e.g. be generated by the core engine for each of one or more of the land-based objects and/or structures based on the measured impact measurands for a respective land-based objects and/or structures the quantified loss measure value being given by the percentual portion of physical damage to a land-based objects and/or structures weighted by the undamaged land-based objects and/or structures. A monetary equivalent of measured quantified loss measure value of one or more of the land-based objects and/or structures can e.g. be generated by the core engine giving the monetary equivalent of the measured physical damage of the land-based objects and/or structures.

In an additional embodiment variant, digital representations of the land-based objects and/or structures can e.g. be assembled by the core engine, wherein the digital representations are composed of digital object elements stored in the object elements library, and wherein the monetary equivalent of the measured physical damage of the land-based objects and/or structures is generated from an aggregated monetary equivalent of the digital object elements of a land-based object and/or structure in relation to the measured physical damage of the land-based object and/or structure. Further, monetary equivalent values to each of digital object elements stored in an object elements library can e.g. be assigned and dynamically updated by the system, wherein the aggregated monetary equivalent of the digital object elements of a land-based object and/or structure is dynamically generated based on the digital object elements of the object elements library. One or more digital images of the land-based object and/or structure can e.g. be captured by the system, the one or more digital images automatically captured by the remote airborne and/or spaceborne sensors and/or transmitted by an individual associated with the land-based object and/or structure and/or captured from a database accessible via a data transmission network (13), wherein, by means of an identificator and locator unit, elements of a land-based object and/or structure are identified by data processing of the one or more digital images based on the digital elements of the object elements library and located within the land-based object and/or structure, and wherein the core engine assembles the digital representations of the land-based objects and/or structures using the digital elements identified and located within the land-based object and/or structure. Automated pattern recognition can e.g. be applied to the one or more digital images by the identificator and locator unit using automated pattern recognition for identifying and locating the digital elements within the land-based object and/or structure. The automated pattern recognition can e.g. be realized by machine-learning structures or Al-based structures comprised in the identificator and locator unit.

As an embodiment variant, the one or more airborne and/or space-based optical remote sensing devices equipped with one or more optical remote sensors can e.g. have a sensor resolution in a spectral band in the infrared range measuring temperature between -50°C to 50°C. The one or more airborne and/or space-based optical remote sensing devices and/or optical sensory satellites or spacecrafts and/or optical sensory manned/ unmanned aircrafts or drones equipped with one or more remote airborne or spaceborne optical sensors can e.g. have a radiometric resolution given by the optical sensor's sensitivity to the magnitude of the electromagnetic energy or the optical sensor's measuring color depth at least comprises 8 bit giving at least 255 brightness levels, wherein the radiometric resolution defines the resolution of the system to detect differences in reflected or emitted energy. The one or more airborne and/or space-based optical remote sensing devices equipped with one or more optical remote sensors can e.g. have a spatial resolution of at least 7.5cm and/or at least 20cm. The one or more airborne and/or space-based optical remote sensing devices equipped with one or more optical remote sensors have a spatial resolution of at least 30x30 with 120x120 total internal reflection (TIR) and/or 30x30 with 60x60 TIR and/or greater than 15x15. The one or more airborne and/or space-based optical remote sensing devices equipped with one or more optical remote sensors can e.g. have a temporal resolution greater than 5 to 10 revisits a day. The one or more airborne and/or space-based optical remote sensing devices equipped with one or more optical remote sensors can e.g. have a spatial coverage of 100x100 km or more.

In an embodiment variant, the vulnerability curve can e.g. be related on one or more characteristic parameter values the land-based objects and/or structures comprising at least aggregated monetary equivalent and/or size and/or quality and/or age and/or type of structure and/or degree of coverage and/or type of coverage and/or occupancy and/or past/historical damage assessment parameter values capturing past damages impacted by former natural catastrophe events and/or deviation parameter values capturing based on measured deviations in a data imagery of a land-based object and/or structure before and after the natural catastrophe event.

In another embodiment variant, at least one current damage parameter value capturing physical damages resulting from the natural catastrophe event can e.g. be received by the digital ground system, wherein the vulnerability curve is calibrated based on said current damage parameter value. Said current damage parameter value can e.g. be generated by matching a digital image of a land-based object and/or structure prior to the occurrence of the natural catastrophe event to a digital image of the land-based object and/or structure after the impact by the natural catastrophe event determining the damage parameter value as detected variance within that land-based object and/or structure.

In a further embodiment variant, object and/or structure location parameters can e.g. be received from extracting location data from satellite imagery previous to the natural catastrophe event and/or from existing object and/or structure location data listings. Object and/or structure location parameters can e.g. also be derived from portfolio information of a risk-transfer system.

In an embodiment variant, the core engine the core engine generates normalized and/or weighted distribution maps of land-based objects and/or structures identified by the location parameters and potentially damaged in the area affected by the natural catastrophe event, the normalized and/or weighted distribution maps at least comprise distribution maps of damage impact strength to land-based objects and/or structures and/or normalized loss distribution.

In another embodiment variant, an impact measurand value can e.g. generated for each of one or more of the land-based objects and/or structures based on an event intensity in real-time or quasi real-time with the occurrence of the natural catastrophe event, wherein the generation is automatically triggered by detecting one or more predefined threshold values measured associated with the natural catastrophe event by means of the airborne and/or spaceborne optical remote sensing devices and/or satellites exceeding predefined threshold values, the threshold values at least comprising a predefined threshold for measuring the extent of the affected area and/or intensity of the natural catastrophe event and/or impact strength of the natural catastrophe event. This embodiment variant has, inter alia, the advantage that it technically allows quantitative, real-time, or quasi-real-time measurements of physical natural catastrophe impacts, e.g. flood event impacts to land-based objects or structures, which was not possible with prior art systems, mainly relying on historical data and statistical analysis, i.e. which do not include direct physical measurements by sensory devices.

In a further embodiment variant, the natural catastrophe event footprint can e.g. comprise one or a plurality of measured time series of digital satellite imagery, each digital satellite imagery comprises an assigned measuring time stamps or time range, wherein based on the time series of measured digital satellite imagery dynamics of a propagation of the natural catastrophe event footprint is measurably captured by the core engine. This embodiment variant has, inter alia, the advantage that it technically allows to capture and measure and/or monitored real-time dynamics of an occurring natural catastrophe event. This allows to increase the precision and accuracy of the measured impact values, since it can e.g. be calibrated by propagating the impact stepwise in time intervals.

In an embodiment variant, the natural catastrophe event footprint can e.g. be generated by measuring the satellite imagery using one or more natural event parameters for locations or grid cells of the topographical map, wherein the natural event parameters comprising measurands measuring at least windspeed and/or precipitation range and/or intensity, flood level and/or hale intensity and/or hale size and/or air temperature and/or humidity and/or earthquake intensity and/or storm surge measure and/or avalanche strength and/or mud slide and/or tsunami strength and/or terrain incline and/or wildfire or conflagration extent.

In an embodiment variant, the natural catastrophe event footprint can e.g. further be generated by measuring the satellite imagery, the natural catastrophe event footprint being based on predicted occurrence probability measures for a selected area to be affected by a future occurrence of a natural catastrophe event.

Finally, in an embodiment variant, the impact measurands and/or loss measures can e.g. be generated to represent quantified measures for an actual physical damage in case of the occurrence of the natural catastrophe event.

Thus, the satellite and aerial imagery-based, optical sensory system for assessing property damage measures and/or estimates in case of a natural catastrophe event can e.g. at least comprise a digital platform configured for receiving digital satellite and aerial imagery of an area affected by the natural catastrophe event and for receiving location information about properties in the area affected by the natural catastrophe event, and a core engine configured for deriving a topographical map of a natural catastrophe event footprint from the digital satellite and aerial imagery for the area affected by the natural catastrophe event, for matching location information to the topographical map and the natural catastrophe event footprint, respectively, and for identifying properties in the area affected by the natural catastrophe event. The core engine is further configured for parameterizing a vulnerability curve based on the natural catastrophe event footprint. The vulnerability curve represents a damage indicator per event intensity. The core engine is also configured for generating damage measures and/or estimate values for one or more properties in the area affected by the natural catastrophe event based on the vulnerability curve.

The satellite and aerial imagery-based, optical sensory system is, inter alia, structures to process and transmit data, in particular measuring data, in digital form. The sensory-based system according to the invention may be realized to use elements as used e.g. in wireless communication systems, process control systems or digital instruments comprising for example central processors, network processors, memory units, input/output units, interfaces, graphic engines, arithmetic and logic devices, gate arrays, interconnect structures, etc. In the context of the present invention the core engine may for example at least comprise a control unit and an arithmetic and logit unit running the central processing operations of the inventive sensory-based system. The sensory-based system may for example signal the damage measures and/or estimate values for the properties as listings, as pointers in a map or as diagrams in a dashboard style. The measured damage measures and/or forecasted probability values may for example be quantified as damage percentage in the area, as an estimated absolute amount of loss of property value, as a range of value reduction or the like.

The satellite and aerial imagery can as a variant also include imagery for example provided by satellite and aerial imaging companies or government institution using satellite imaging technology for spaceborne photography of the Earth and aerial imagery based on manned/unmanned aircrafts, drones, balloons. Satellite imaging uses Earth observation satellites of Earth remote sending satellites designed for Earth observation from orbit. Different imaging technologies and different satellite altitudes achieve different imaging resolutions. The satellite imagery can be provided as digital data to the digital system which can be used to derive a topographical map of the captured landscape. In case the satellite imagery further includes data about hazard parameters like surface temperature, rain intensity or elevation the satellite imagery may also be used as a basis for the footprint of the natural catastrophe event.

The method for assessing property damage measures and/or forecasted impact measures in case of a natural catastrophe event impact according to the present invention is designed for rapid, as e.g. real-time, or quasi real-time, damage assessment. The digital platform receives digital satellite and aerial imagery of an area affected by a natural catastrophe event. Further, the sensory-based system receives location information about properties located in a region including the area affected by the natural catastrophe event. The geographic location data may for example be received in form of portfolio data for a property portfolio as for example established for administration or insurance purposes. The property or portfolio data may include additional information as for example the property value, past damages, etc. as will be explained in more detail below.

In the method for measuring and/or assessing property damage measures according to the invention the core engine of the sensory-based system can e.g. generate, from the digital satellite and aerial imagery, a topographical map of a natural catastrophe event footprint for the area affected by the natural catastrophe event. Further, the core engine matches the location data of a property to the topographical map to identify properties in the area affected by the natural catastrophe event. The core engine parameterizes a vulnerability curve, which represents a damage indicator per event intensity based on the natural catastrophe event footprint. The damage indicator may for example be expressed as the mean damage degree for a specific hazard intensity. The damage indicator may for example be derived from data about a monetary equivalent value of a property, e.g. additionally using expert opinions about damages at a specific hazard intensity and/or from historic damage data as will be explained in more detail below. Based on the vulnerability curve the core engine generates damage measures values for one or more properties in the area affected by the natural catastrophe event. Thus, the method according to the invention can for example directly measure or forecast/predict a potential risk of property loss, a replacement value, a risk of service failure or crop shortfall before a natural catastrophe event occurred. For example, the core engine can e.g. compare the location data of a property with properties at similar locations and derive an expected damage indicator from the vulnerability curve for the similar location. The method also can provide rapid damage assessment shortly after the impact of a natural catastrophe event and indicate quantified damage measures and/or estimate values related to the properties in the area of impact.

The topographical map of the footprint of the natural catastrophe event serves as the basis for the distribution of hazardous impacts caused by the event (or in short event impacts) in the area where the natural catastrophe event occurred. Advantageously, the footprint indicates the distribution of the intensity of the event by laying out hazard parameter values over the topographic map. The event impact is extracted from the satellite imagery measurements, as discussed above. Also, the accuracy of an event impact can e.g. be improved or calibrated by supplemental measurements by ground measuring stations of one or more hazard parameters at locations of the topographical map, for example measuring stations for windspeed and wind direction. The hazard parameter can for example indicate windspeed, rainfall intensity, hale intensity, hale size, temperature (particularly temperatures below 0 °C), earthquake intensity, storm surge, avalanche, mud slide, tsunami, terrain incline and/or wildfire. Advantageously, the natural catastrophe event footprint can include information of a combination of hazard parameters. For example the footprint my indicate the distribution of rain intensity and temperature because both hazard parameters mutually enforce the event impact on a property. Or the footprint may indicate measurements for the parameters windspeed and storm surge which can be correlated and intensify the damaging event impact. The significance of specific hazard parameters depends on the geographic area and the type of natural catastrophe event and can be reflected in the natural catastrophe event footprint.

The footprint of the natural catastrophe event can also be based on a predicting modelling structures and simulation structures of one or more hazard parameters. The hazard model structure may for example indicate the distribution of windspeed, rainfall intensity, hale intensity, hale size, temperature (particularly temperatures below 0°C), earthquake intensity, storm surge intensity, tsunami intensity. Further the hazard model may for example indicate the probability of areas being affected by avalanches, mud slides, earthquakes, tsunamis and/or wildfires. The hazard parameter models can for example be derived from measurements of the hazard parameters during previous hazard impacts in the affected area or elsewhere. Commonly used weather models or any other hazard modelling indicating the progression of a hazard parameter during a natural catastrophe event may serve as a basis for hazard parameter model.

In a variant of the method for assessing property damage measures, the natural catastrophe event footprint is a flood footprint and/or hurricane track footprint. The satellite imagery of the area affected by a flood event or hurricane event is used as the basis for the topographical map of the footprint of the natural catastrophe event. Based on the distribution of the flood and/or the hurricane shown in the satellite imagery the event footprint can be indicated in the topographic map. The core engine can assign the location of a property in the map using the location information and can extract the hazard intensity and impact on the property from the vulnerability curve based on the footprint. Using the vulnerability curve the hazard intensity can be transformed in a quantified damage measure or estimate for the risk of a property damage.

The vulnerability curve derived from the core engine of the sensory-based system and used for the generation of property damage measures assigns a damage indicator to an identified hazard intensity. The damage indicator provides a measure for a degree of damage that is to be expected for a specific hazard intensity. The vulnerability curve can aggregate multiple hazard parameters which together define a hazard intensity and be designed as a two dimensional graph. The vulnerability curve can also be three or multi-dimensional indicating different hazard parameter intensities on different axes of the curve. The vulnerability curve can also be designed as a vulnerability model including one or more hazard parameters that are included in the natural catastrophe event footprint. The vulnerability model reflects the intensity of one or more physical forces impacting a property during a hazardous event and allows to investigate the impact on a property before actual impact. The intensity of the physical forces can be measured by real world measurements. In case of missing measurements or measurement gaps the intensity can be derived from reasonable assumptions, regressions, or simulations.

The vulnerability curve, respectively the damage indicator, can for example be based on information about one or more measurable property characteristics. The property characteristics may for example indicate a value, a size, quality, age, type of structure, a coverage and/or occupancy of a property. The value may for example be derived from the size of property and/or be represented by the purchasing value of the property and/or the construction costs of a building on the property. Further, the property characteristics may for example comprise past damage information defining property damages resulting from natural catastrophe events in the past, wherein the information may include specifications about the past event and hazard intensity. Also, the property characteristics may be based on an expert opinion about a damage level at a specific event or hazard intensity, existing loss data related to natural catastrophe events, and literature reviews or damage survey reports related to natural catastrophe events impacting property. Furthermore, the property characteristics may be based on comparing data imagery of the property before and after the natural catastrophe event. The damage indicator can summarize several property characteristics to represent a risk of damage. Preferably, the damage indicator is provided as a statistical mean damage degree.

The core engine can e.g. derive the vulnerability curve or vulnerability model specifically for the natural catastrophe event monitored by the measured satellite imagery and the natural catastrophe event footprint derived thereof including the hazard parameters relevant for this event as well as for the specific property characteristics provided by the property information. Thus, only hazard parameters and property characteristics relevant for the assessment of a property damage in the affected area are included in the vulnerability curve and the processing time of the core engine for generating the damage measures and/or estimate values for one or more properties can be reduced.

In a variant of the method for assessing property damage measures, the digital ground system can e.g. receive additionally actual and current damage data measuring property damages resulting from the natural catastrophe event, and the vulnerability curve can be weighted and/or calibrated on said present damage data. For example, the owners or operators of some properties may be able to capture and provide a damage data quickly after the hazardous impact of the natural catastrophe event took place. The information may for example be based on automated, electronic property surveillance systems that provide on-time information of damages of the property. The surveillance systems may for example use surveillance cameras or fire detectors that are configured to transmit present damage information via a network. The present damage information may be associated with the hazard intensity as indicated in the natural catastrophe event footprint for the location of the property, which may be applied for generating the vulnerability curve. The use of present damage information may increase the accuracy of the vulnerability curve.

In a further variant of the method for assessing property damage measures and/or estimates according to the present invention the digital platform receives geographic property location data, e.g. latitude and longitude parameter values, from extracting location data from satellite and aerial imagery pervious to the natural catastrophe event. The core engine may be configured to compare the previous satellite and aerial imagery with the satellite and aerial imagery of the natural catastrophe event and identify imaged properties in the affected area and their location information. The use of previous satellite and aerial imagery to receive location information about properties in the area affected by the natural catastrophe event accelerates the risk assessment, particularly the forecast of potential damages and property loss. The assessment can be refined after additional property information has been received.

In an example embodiment of the sensory-based system for measuring property damage measures, the digital ground system additionally can e.g. be connected to at least one location data database. For example, the digital ground system may receive property location data from existing property location data listings. Such listings are for example established and maintained for legal and administrative purposes. The the location information may be publicly accessible or provided on demand. Advantageously, the digital system may include an application programming interface (API) providing communication to at least one location information database to receive location information about properties in the area of the natural catastrophe event.

In another variant of the method for assessing property damage measures, the digital ground system can e.g. receive property location data filtered from portfolio data of a risk-transfer system, as e.g. an automated property insurance system. This way the risk-transfer system is able to assess damage and risk measurement for all of the properties in a portfolio that are in the area affected by the natural catastrophe event. The number of properties in the portfolio can e.g. be smaller than the number of properties in the area, which accelerates the damage impact and risk (impact probability measurements) measurements by focusing on selected properties. The digital ground system may e.g. be connected to an insurer's data processing system using an application programming interface (API) for providing communication to the portfolio information database of the insurer. Ideally, the functionalities of the present inventive sensory-based system can be integrated into the insurer's data processing workflow using the API. The risk-transfer system can receive the results of the risk assessment quickly after providing access to the database.

In still a further variant of the method for assessing property damage measures and/or estimates according to the present invention the core engine additionally can generate statistics and/or maps of properties identified by geographic location data and potentially damaged in the area affected by the natural catastrophe event. The statistics and or maps may include data and measures about the damage degree, the type of damage indicator, the hazard intensity and other information associated to the hazard impact and the damage risk. Particularly, the core engine may e.g. generate a map of a damage distribution and/or loss distribution. The statistics provide a quick oversight of the extend of potential property damages and the magnitude of the risks associated with the hazardous event.

Further, the inventive system can e.g. generate the property damage measure values for one or more properties in a short time period (real-time or quasi-real-time) after the event. The time period is preferably smaller or equal one week. Particularly, the period of time for generating estimated loss values for the portfolio is equal or shorter than 1 week. The sensory method provides a reliable damage measurement with highly increased speed with a high accuracy, which further also allows for early detection of risks (impact probabilities in case of a natural catastrophe event) and required mitigation measures. Advantageously, the damage measures generated by the core engine providing a quantified forecast measure for an expected physical damage to a land-based object or structure, impact on humans, disruption of services and/or loss of livelihood. The quantified measures and measuring parameter values allow for fast hazard response and efficient claim handling, for example, in respect to the in-time supply of resources to cover and/or mitigate the impact of the natural catastrophe event. In an example embodiment of the sensory-based system for measuring damage impact measures, the digital ground system can e.g. be connected to at least one location date database, particularly providing portfolio location data of a property insurer entity.

The sensory-measurement based system and the automated method for measuring property impact and damage further also enables the reliable prediction of the magnitude and the timing of potentially future or up-coming events and technically allows for measuring quantified impact measures and physically occurring losses impacted by the natural catastrophic event, which may include a quantified forecasted physical damage measure, a realistic prediction of the impact on humans, a quantified dimension of service disruption, a quantified monetary loss and loss of livelihood. The technically method is able to aggregate different hazard types using a data-driven common vulnerability curve or modelling structure, and allows for coordinated and harmonized risk responses across different disciplines.

### Brief Description of the Drawings

The present invention will be explained in more detail, by way of example, with reference to the drawings which merely serve for explanation and should not be construed as being restrictive. The features of the invention becoming obvious from the drawings should be considered to be part of the disclosure of the invention both on their own and in any combination:

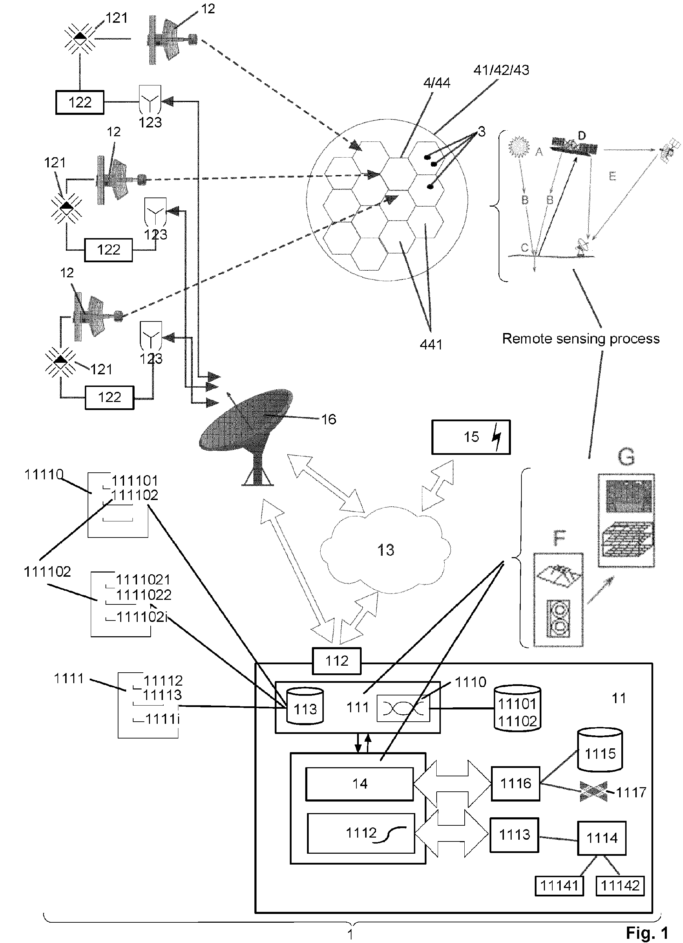

Figure 1 shows a block diagram schematically illustrating an exemplary satellite imagery-based, optical system 1 and method for measuring physical impacts to land-based objects and/or structures 3 by impact measurands 1113 in case of an occurrence of a natural catastrophe event 2. The natural catastrophe event 2 impacting the land-based objects and/or structures 3 causing a physical damage 32 to the land-based objects and/or structures 3. Remote satellite sensors 121 are capturing and measuring digital satellite imagery 122 of an area 4 affected by the natural catastrophe event 2 and transmitting the digital satellite imagery 122 to a digital ground system 11.
Figure 2 shows a diagram schematically illustrating an example of a simplified flow diagram schematically illustrating the optical sensory-based method for measuring and assessing property damage measures according to the present invention used for providing fast and accurate quantified loss measures and estimates and actionable insights after an occurred natural catastrophe event for insurers.
Figure 3 shows a block diagram schematically illustrating benefits to insurers by using the optical sensory-based system according to the present invention,
Figure 4 shows a block diagram schematically illustrating an exemplary user interfaces to the digital system providing an exemplary assessment report,
Figure 5 shows a diagram schematically illustrating a further example of a user interfaces to the optical sensory-based system automatically providing an exemplary report based on a Rapid Damage Assessment (RDA) tool.
Figure 6 shows a block diagram schematically illustrating the structure of an example of the inventive system according to the present invention using an external API interface.
Figure 7 shows a block diagram schematically illustrating an exemplary overview of an exemplary architecture for the optical sensory-based method according to the present invention.
Figure 8 shows a block diagram schematically illustrating exemplary hazard parameters and damage characteristics for the method according to the present invention.
Figure 9 shows a block diagram schematically illustrating an exemplary vulnerability curve generated by the optical sensory-based system 1 according to the present invention,
Figure 10 shows a block diagram schematically illustrating an example for parameterizing a vulnerability curve 1112 for the method and system 1 according to the present invention.
Figure 11 shows a block diagram schematically illustrating an extended example of the flow diagram schematically illustrating the method according to the present invention as illustrated in Figure 2.
Figure 12 shows a block diagram schematically illustrating a case study based on the method according to the present invention.
Figure 13 shows a block diagram schematically illustrating another case study based on the method according to the present invention.
Figure 14 shows a block diagram schematically illustrating an exemplary satellite imagery 122 map including a flood footprint 11112.
Figure 15a shows a block diagram schematically illustrating an exemplary satellite imagery with an overlay of a natural catastrophe event footprint 1111, and
Figure 15b shows a block diagram schematically illustrating a topographic map derived from the satellite imagery of figure 15a with the natural catastrophe event footprint 1111 classified in property areas 4.

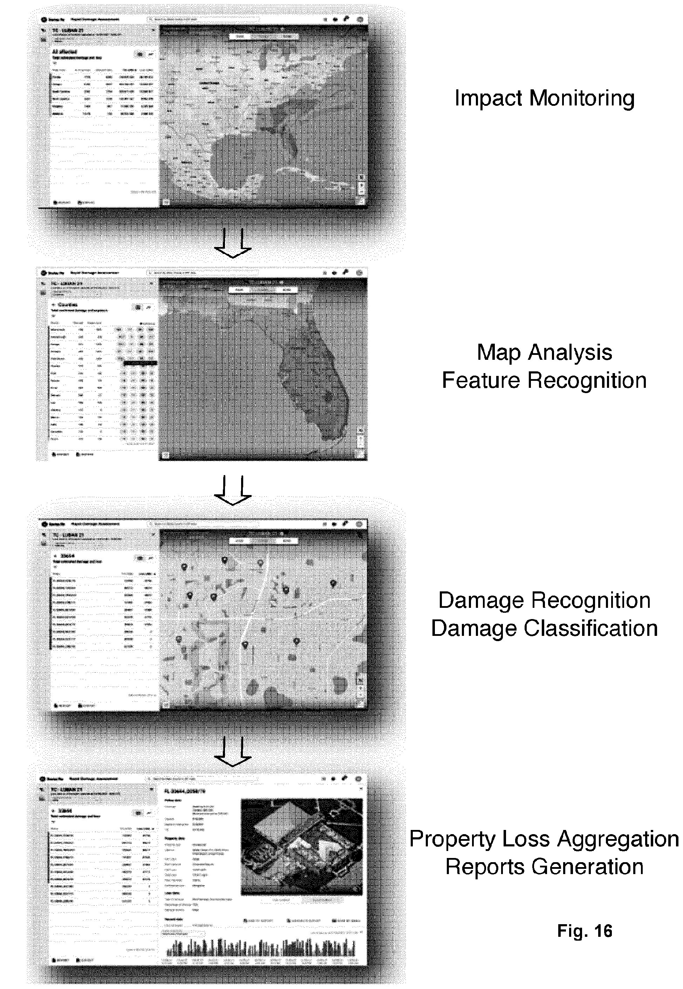

Figure 16 shows a diagram schematically illustrating an exemplary embodiment variant comprising the steps of (i) Impact monitoring, (ii) Map analysis and feature recognition, (iii) Damage recognition and damage classification, (iv) Property loss aggregation reports generation.

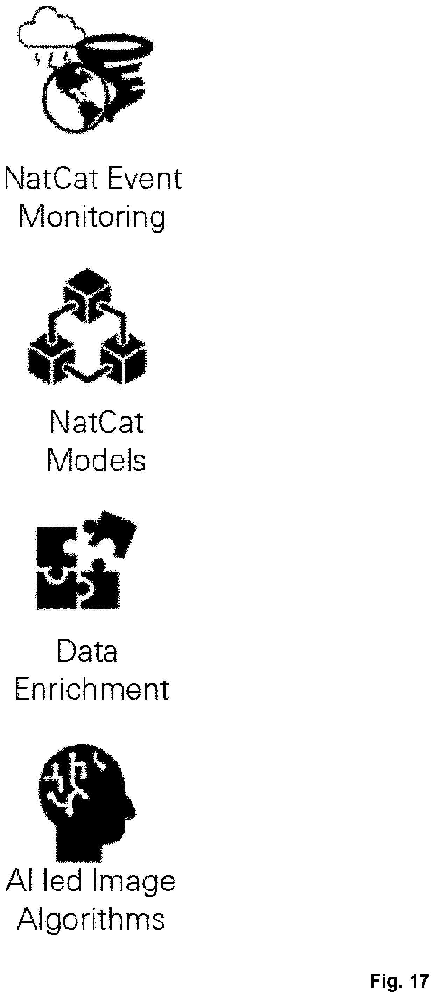

Figure 17 shows a diagram schematically illustrating an exemplary embodiment variant comprising the basic steps of (i) Natural catastrophe even monitoring by capturing sensory data from appropriate measuring devices, (ii) Natural catastrophe modelling based on the captured sensory data, (iii) Data enrichment and data pre-processing, and (iv) Artificial Intelligence led image processing comprising feature recognition, feature classification etc.

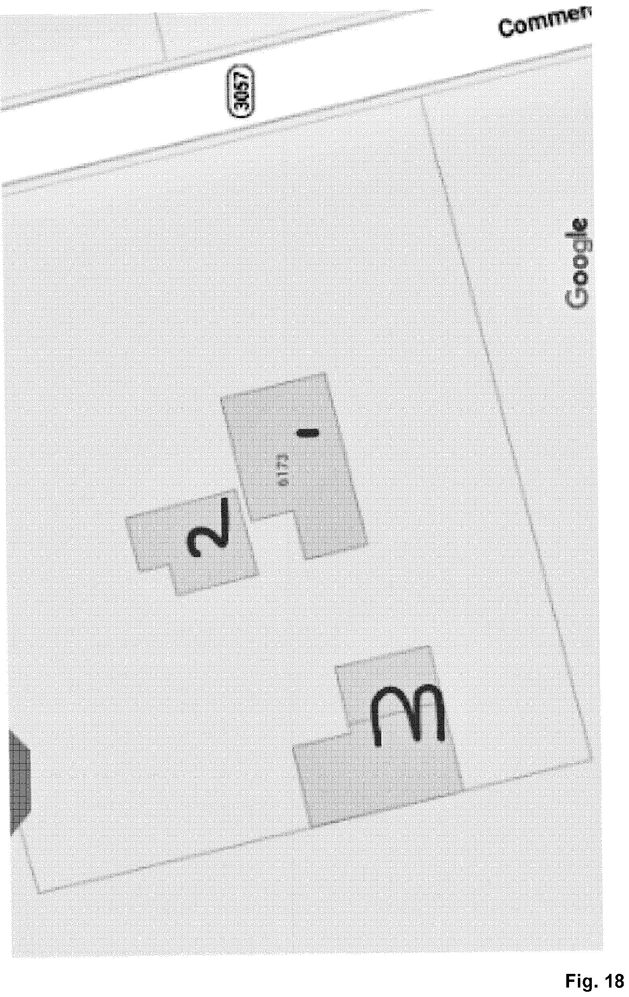

Figure 18 shows a diagram schematically illustrating exemplary 3 building footprints in a land parcel.

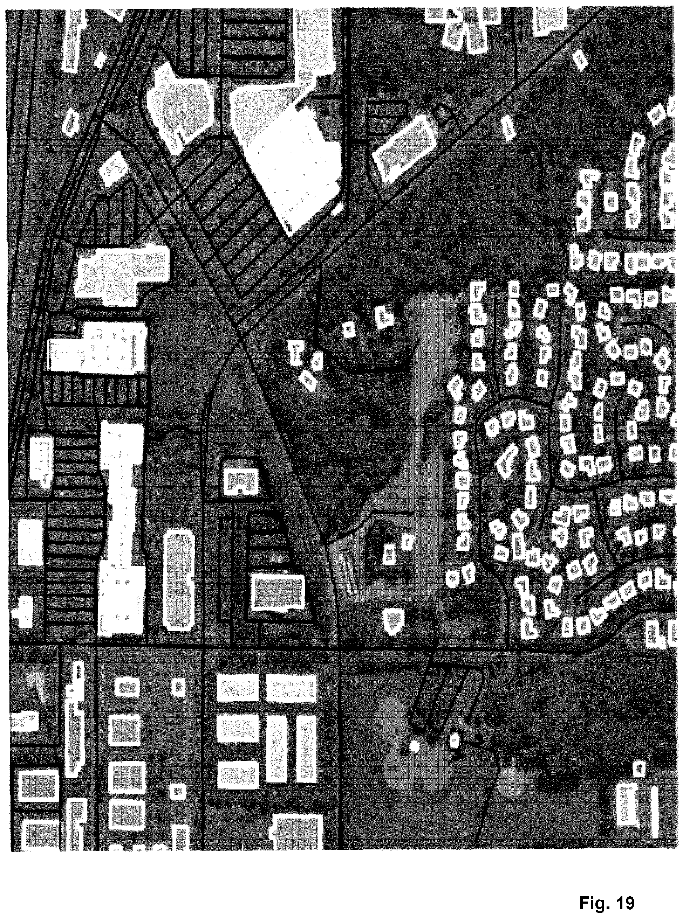

Figure 19 shows a diagram schematically illustrating exemplary output where coordinates of each individual polygons and centroid lat/long of each of these individual polygons. This is done to handle potential errors in the portfolio where a commercial building is categorized as residential building as well as incorrect collection of building footprint data.
Figure 20 shows a diagram schematically illustrating an exemplary pre-event image (technically referred to as blue sky image) processing. Recency and resolutions are key considerations to get the best image.
Figure 21 shows a diagram schematically illustrating an exemplary post-event image (technically also referred to as Gray sky image) processing.

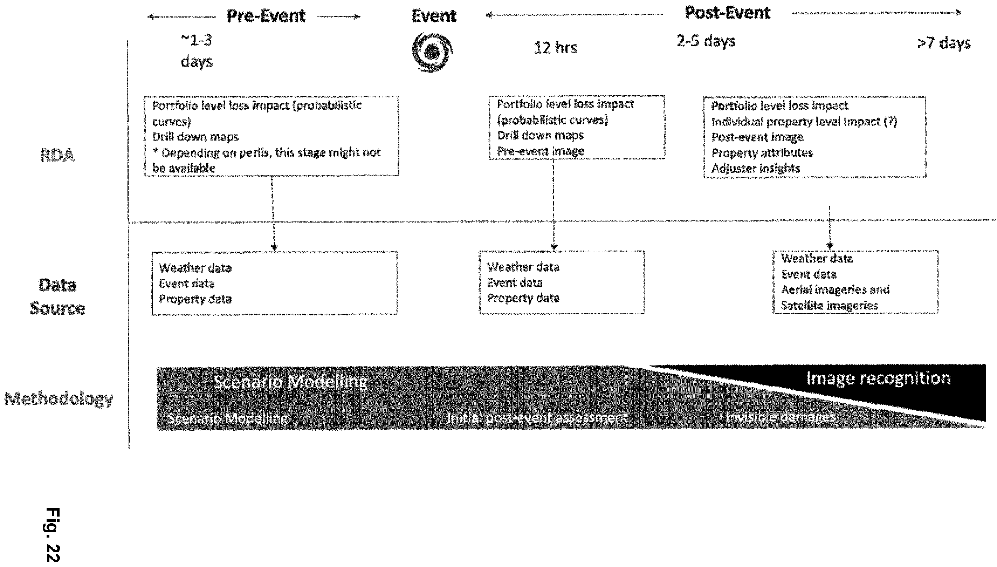

Figure 22 shows a diagram schematically illustrating an exemplary overview of the RDA system methodology.
Figure 23 shows a diagram schematically illustrating an embodiment variant of a high level damage detection model architecture.

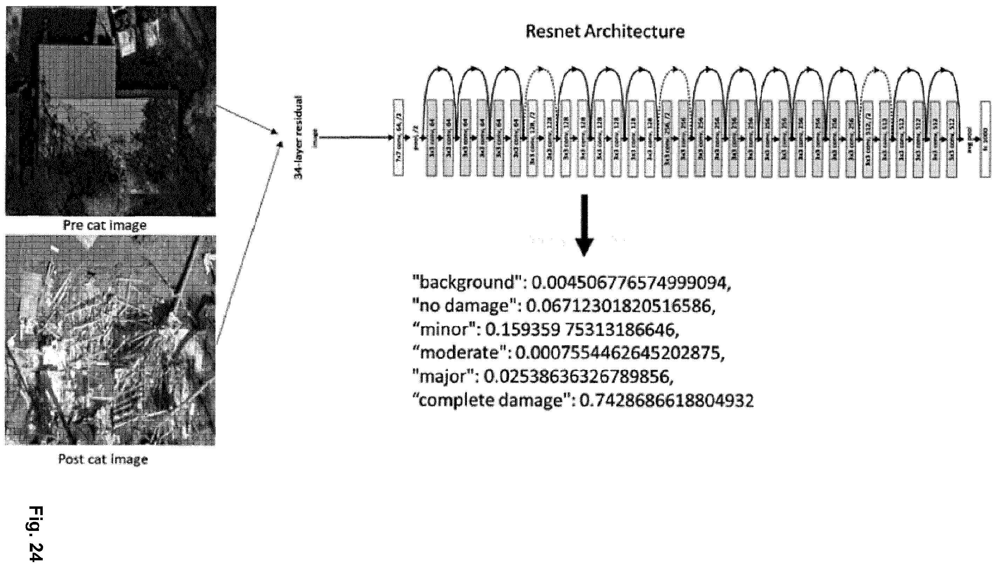

Figure 24 shows a diagram schematically illustrating an embodiment variant of a damage classification with damage severity at an overall building level. The modelling structure can e.g. be trained to classify buildings into classes, e.g. 5 classes of damage severity which e.g. are No damage, Minor, Moderate, Major and Complete Damage.

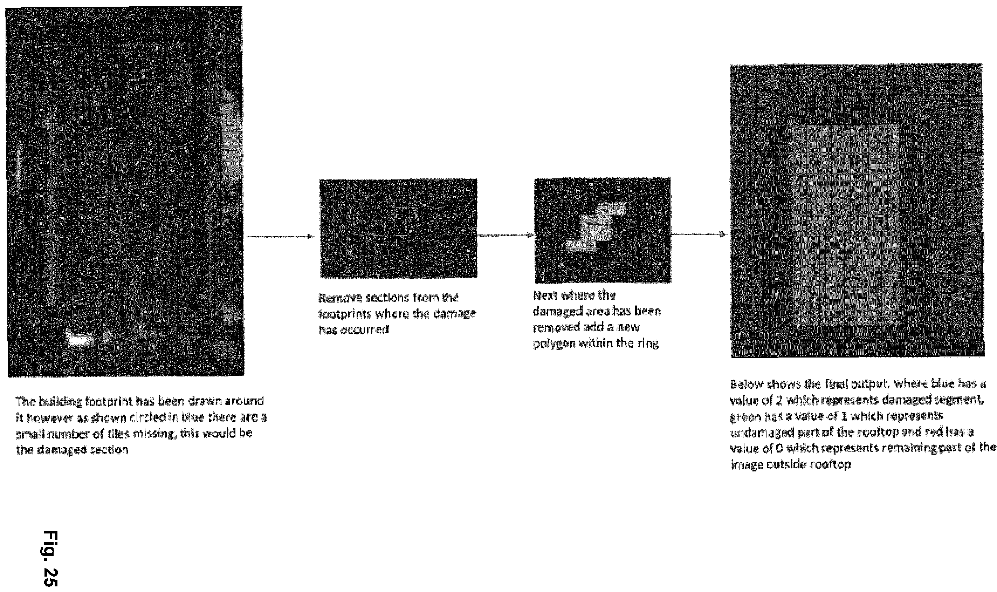

Figure 25 shows a diagram schematically illustrating an embodiment variant of the determination of the facets in the roof - While the above step gives the damaged area of the entire roof, it does not give details on which facets are damaged and which are not. There are 2 ways roof facets are detected: a) DSM images - From the DSM images, elevations of different sections of the roof are identified which is then used to segment out multiple facets; b) Machine-learning model - When DSM images are not available, CNN architecture is used to determine the various segments of the roof. This approach may be less accurate hence DSM imagery-based approach may be preferred.
Figure 26 shows a diagram schematically illustrating an exemplary identification of damaged segments of the roof i.e. the pixels which are identified as damaged part of the roof. In the example of figure 26, there are 2 damage segments.

### Detailed Description of the Preferred Embodiments

Figure 1 schematically illustrates an architecture for a possible implementation of an embodiment of an aerial and/or satellite imagery-based, optical sensory system 1 for measuring physical impacts to land-based objects and/or structures 3 by impact measurands 1113 in case of an occurrence of a natural catastrophe event 2. The land-based objects and/or structures and/or formations 3 can e.g. at least comprise building structures 31 and/or agricultural structures 32. The occurring natural catastrophe event 2 is physically impacting the land-based objects and/or structures 3 causing a physical damage 32 to the land-based objects and/or structures 3. For example, the natural catastrophe event 2 can at least comprise a flood event 211 and/or hurricane event 212 and/or a fire event 213 and/or an earthquake event 214 and/or a drought event 215 and/or seismic sea wave / tsunami event 216 and/or costal erosion event 217 and/or volcanic eruption event 218, the natural catastrophe event footprint 1111 at least comprises a flood event footprint 11112 and/or a hurricane event footprint 11113 and/or a fire event footprint 11114 and/or an earthquake event footprint 11115 and/or a drought event footprint 11116 and/or seismic sea wave / tsunami event 11117 and/or costal erosion event 11118 and/or volcanic eruption event 11119. Thus, the physical damage 32 to a land-based objects and/or structures and/or formations 3 depends on the occurring natural catastrophe event 2 materializing or forming as water damage, fire damage, earthquake damage, erosive damage, withering damage etc.

The satellite imagery-based system 1 comprise one or more airborne and/or spaceborne optical remote sensing devices 121 and/or optical sensory satellites 12 and/or optical sensory manned/ unmanned aircrafts or drones 12 equipped with one or more remote airborne or spaceborne sensors 121 being within a frequency band/wavelength range 1211 at least comprising infrared to visible multi-spectral sensors 12111 and/or synthetic aperture radar 12112 and/or hyperspectral sensors 12113 for capturing digital satellite imagery 122 of a geographic area 4 affected by the natural catastrophe event 2 and transmitting the digital aerial and/or satellite imagery 122 to a digital ground system 11. It is explicitly to be noted that the remote sensing devices 12 can be any kind of airborne or spaceborne vehicles, as, for example, manned and/or unmanned aircraft and/or drones and/or balloons (hot-air balloons, gas balloons etc.) and/or zeppelins and/or satellites and/or spacecrafts etc. equipped with optical sensors, in particular imagery sensors for measuring and/or capturing aerial or satellite surface imagery 121. In particular, Unmanned Aerial Systems (UAS) can be used to provide a largely inexpensive, flexible way to capture high spatial and temporal resolution geospatial data. Computer vision technology, as e.g. Structure from Motion (SfM), can be used according to the invention for processing of the UAS or otherwise captured aerial or spaceborne (satellite) imagery to generate three dimensional point clouds and orthophotos. The manned/ unmanned aircrafts or drones 12 can e.g. comprise an Unmanned Aerial System (UAS), i.e. an aircraft without an onboard pilot that is operated autonomously or manually by a remote control operator or operator system. The terms unmanned aerial vehicle (UAV), unmanned aircraft systems/vehicles, remotely piloted aircraft (RPA), and drone can be used herein interchangeably. UAS platforms are herein adopted for geospatial purposes, and can e.g. be small UAS (sUAS), weighing between 0.5 lbs (~0.2 kg) and 55 lbs (~25 kg) as designated by the U.S. Federal Aviation Administration (FAA; weight limits may vary in other countries). The aerial remote sensing devices 12 can also comprise Rotary Wing devices (RW), i.e. single or multirotor copter with upward-mounted propeller(s) that generate lift allowing aircraft to take off and land vertically and hover during flight. To capture specific surface structure RW platforms typically provide more maneuverability than fixed wing aircraft. The aerial remote sensing devices 12 can also comprise Fixed Wing devices (FW), i.e. devices with a stationary wing and forward mounted propeller(s) to generate lift and continuously move aircraft forward at varying pitch angles. FW aerial platforms can be useful for the present invention, the airborne devices are required to fly at higher speeds and for longer duration (40 minutes to several hours) increasing aerial coverage in comparison to RW. As mentioned, for the image pre-processing, for example, impage processing techniques can be applied as Structure from Motion (SfM) computer vision algorithms to process digital photos into 3D point clouds and subsequent geospatial data processing such as digital terrain and surface modelling, and/or orthophotos. SfM, as used herein, also encompasses multi-view stereo techniques (e.g., MVS, SfMMVS). For the present use, itis to be noted that UAS can often be hindered by even slightly windy conditions, requiring frequent confirmation of weather forecasts at/near the site to be optically measured/captured. Although device dependent, FW aircraft are often flown into and with the wind to minimize side-to-side movement, whereas RW aircraft are less restricted in flight direction. FW platforms require a larger staging area than RW platforms for launch and skid landings. During data collection missions, flightlines should be organized to ensure stereoscopic coverage. Further, UAS-based image capture may require considerable overlap (80-90% end-lap and 60% side-lap can e.g. be recommendable) to ensure effective image matching due to the larger distortions introduced by lower flying altitudes and platform instability. Nadir-facing images can be collected, although convergent views can be recommendable (i.e. integration of obliques).

UAS capturing imagery can e.g. comprise also off-the-shelf, point-and-shoot digital cameras as sensor option. It is often recommendable to avoid wide-angle lenses due to high image distortion, and also parsing video into still images can often not be recommendable because frames may contain blur. It is to note, that off-the-shelf cameras typically have limited spectral resolution, and reflectance calibration can be challenging, but removal of the internal hot mirror permits capturing of near-infrared wavelengths. For this, spectral targets with known reflectance properties can e.g. be placed in situ to calibrate the optical sensor measurements, or sensors such as the Tetracam ADC Lite sensor allow image capture from UAS with spectral bands matching certain Landsat bands, thereby facilitating imagery mapping and comparison. Georeferencing schemes for UAS acquired imagery include: (1) direct, which uses known camera locations through GNSS-enabled cameras or onboard GNSS and IMU measurements stored and attached to captured images, (2) indirect, which uses GNSS-located ground control points (GCPs), and (3) a combination of direct and indirect. It is to be noted that airborne sensory (unmanned or manned), in contrast to satellite sensory, may allow for better non-image measuring date capturing. Non-imagery sensory of UAS, e.g. used for improving the optical measurements, can comprise, for example, collecting measurements of temperature, pressure, humidity, and wind for atmospheric sampling and meteorology or environmental surveillance using sensors that can detect CO2, methane, and other gases for pipeline monitoring. Further lidar sensors can e.g. be employed for terrain and 3D mapping, but sensor size, weight, and cost may be restrictive for application.

In general, images can e.g. be processed to generate very high spatial resolution orthophotos. The herein proposed proper orthophoto production comprises removal of radiometric effects (e.g., vignetting, brightness variation from image-to-image, conversion to reflectance values) and geometric effects (e.g., lens distortion, relief displacement). It is to be noted, that for the present application, geometric corrections can e.g. be challenging when using uncalibrated sensors at low altitudes where distortions are magnified.

The optical remote sensing devices 12, as e.g. optical sensory satellites 12 or optical sensory manned/ unmanned aircrafts or drones 12, are connected to one or more aerial and/or satellite receiving stations 16. The aerial and/or satellite receiving stations 16 can be strategically located across a certain geographic region to ensure coverage of the landmass and waters of said geographic region. These aerial and/or satellite receiving stations 16 track and receive data in real-time from satellites for the inventive mapping and/or surveillance and/or monitoring process. As an embodiment variant, the ground-based sensors or aircraft-based sensors can e.g. be used to record additional sensory data about the surface which is compared with the measurements collected from the satellite sensors. In some cases, this can be used to calibrate and/or to weighted and/or normalize the measurements of the target which is being imaged by these satellite sensors. Such sensors may be placed on a ladder, scaffolding, tall building, cherry-picker, crane, etc. Aerial platforms are primarily stable wing aircraft, although helicopters can also be used. Aircraft can be used to collect very detailed images and facilitate the collection of data over virtually any portion of the Earth's surface at any time.

In the embodiment variant of UAS, the aerial and/or satellite receiving stations 16 can e.g. comprise a Ground Control Stations (GCSs) for the unmanned sensory devices, realized as stationary or transportable hardware/software devices to monitor and command the unmanned aircraft. Although the word ground, a UA may actually be operated from the ground, sea or air. GCS are technically as important as the unmanned sensory aircraft themselves, as they enable the interface with the aerial and/or satellite receiving stations 16, wherein any change in the route of the UAS, any eventual error on the aerial platform and/or any outcome of the payload sensors is transmitted and monitored within the GCS of the aerial and/or satellite receiving stations 16. The UAS can further comprise an autopilot loop repeatedly reading the aircraft's position, velocity and attitude (tPVA, with t standing for time) from the Navigation System (NS) and using the tPVA parameters to feed the Flight Control System (FCS) to guide the aircraft. These measuring parameters can also be transmitted and monitored by the Ground Control Stations (GCSs) of the the aerial and/or satellite receiving stations 16 during optical sensory data capturing.

The one or more airborne and/or spaceborne optical remote sensing devices 12 equipped with one or more optical remote sensors 121 can e.g. have a sensor resolution 1212 in a spectral band in the infrared range measuring temperature between -50°C to 50°C. The one or more remote airborne and/or spaceborne sensors 121 can e.g. have a radiometric resolution 12121 given by the optical sensor's 121 sensitivity to the magnitude of the electromagnetic energy or the optical sensor's 121 measuring color depth at least comprises 8 bit giving at least 256 brightness levels, wherein the radiometric resolution 12121 defines the resolution of the system 1 to detect differences in reflected or emitted energy. The one or more remote airborne and/or spaceborne sensors 121 can e.g. have a spatial resolution 12122 of at least 2.5m and/or at least 10m. Further, the one or more remote airborne and/or spaceborne sensors 121 can e.g. have a spatial resolution 12122 of at least 30x30 with 120x120 total internal reflection (TIR) and/or 30x30 with 60x60 TIR and/or greater than 50x50. The one or more remote airborne and/or spaceborne sensors 121 can e.g. have a temporal resolution 12124 greater than 5 to 10 revisits a day. The one or more remote airborne and/or spaceborne sensors 121 can e.g. have a spatial coverage 12125 of 100x100 km or more.

The digital ground system 11 comprises a core engine 111 for generating a digital natural catastrophe event footprint 1111 of the natural catastrophe event 2 based on the captured digital aerial and/or satellite imagery 122, the natural catastrophe event footprint 1111 at least comprising a topographical map 11111 of the natural catastrophe event 2. The natural catastrophe event footprint 1111 can e.g. be generated by measuring the satellite imagery 122 and extracting one or more natural event parameters 111102 for locations or grid cells 1111021 of the topographical map 11110. The natural event parameters 111102 can e.g. comprise measurands measuring at least windspeed 1111022 and/or precipitation range and/or intensity 1111023, flood level 1111024 and/or hale intensity and/or hale size 1111025 and/or air temperature and/or humidity 1111026 and/or earthquake intensity 1111027 and/or storm surge measure and/or avalanche strength and/or mud slide and/or tsunami strength 1111028 and/or terrain incline and/or wildfire or conflagration extent. Further, as an embodiment variant, the natural catastrophe event footprint 1111 can e.g. be generated by measuring the satellite imagery 122, the natural catastrophe event footprint 1111 being based on predicted occurrence probability measures for a selected area to be affected by a future occurrence of a natural catastrophe event 2.

The digital ground system 11 comprises a data transmission interface 112 for receiving location parameter values 41 defining selected land-based objects and/or structures 3 located in or near the area 4 affected by the natural catastrophe event 2.

The digital ground system 11 comprises an object filter 115 for matching the received location parameter values 41 of each land-based objects and/or structure 3 to the generated topographical map 11111, wherein land-based objects and/or structure 3 are identified and filtered lying in the area 4 affected by the natural catastrophe event 2, if the received location parameter values 41 of a land-based objects and/or structure 3 are detected to be in a geographic parameter value range 111111 of the affected area 4 of the topographical map 11111.

The core engine 111 comprises an adaptive vulnerability curve structure 1112 for parametrizing impact measurands 1113 for the land-based objects and/or structures 3 per event intensity 23 based on the measured topographical map 11111, and for generating an impact measurand 1113 value for each of one or more of the land-based objects and/or structures 3 based on an event intensity 23 measured based on the natural catastrophe event footprint 1111 using the vulnerability curve structure 1112. The vulnerability curve 4 can e.g. relate on one or more characteristic parameter values the land-based objects and/or structures 3 comprising at least aggregated monetary equivalent 11171 and/or size 11172 and/or quality 11173 and/or age 11174 and/or type of structure 11175 and/or degree of coverage 11176 and/or type of coverage 11177 and/or occupancy 11178 and/or past/historical damage assessment parameter values 11182 capturing past damages impacted by former natural catastrophe events 11181 and/or deviation parameter values 11179 capturing based on measured deviations in a data imagery of a land-based object and/or structure 3 before and after the natural catastrophe event 2.

The optical sensory-based system 1 and its parameter measurements can e.g. be weighted and/or calibrated using additional measuring parameter values. As such, at least one current damage parameter value can e.g. be received by the digital ground system 11 capturing physical damages resulting from the natural catastrophe event 2, wherein the vulnerability curve 1112 is calibrated based on said current damage parameter value. However, the weighted or calibration process can e.ge. also be conducted fully automatically by the system 1, wherein said current damage parameter value can e.g. be generated by matching a digital image of a land-based object and/or structure 3 prior to the occurrence of the natural catastrophe event 2 to a digital image of the land-based object and/or structure 3 after the impact by the natural catastrophe event 2 determining the damage parameter value as detected variance within that land-based object and/or structure 3. Further, object and/or structure 3 location parameters can e.g. be extracted from extracting location data from satellite imagery previous to the natural catastrophe event 2 and/or from existing object and/or structure 3 location data listings. As an embodiment variant, object and/or structure 3 location parameters 32 can e.g. also or additionally be derived from portfolio information of a risk-transfer system. As another embodiment variant, normalized and/or weighted distribution maps of land-based objects and/or structures 3 identified by the location parameters 32 and potentially damaged in the area 4 affected by the natural catastrophe event 2 can e.g. be generated by the core engine 111. The normalized and/or weighted distribution maps can e.g. at least comprise distribution maps of damage impact strength to land-based objects and/or structures 3 and/or normalized loss distribution.

An impact measurand 1113 value can e.g. be generated for each of one or more of the land-based objects and/or structures 3 based on an event intensity 23 in real-time or quasi real-time with the occurrence of the natural catastrophe event 2. The real-time or quasi real-time generation can e.g. automatically be triggered by detecting one or more predefined threshold values 1213 measured associated with the natural catastrophe event 2 by means of the airborne and/or spaceborne optical remote sensing devices and/or satellites 12 exceeding predefined threshold values 1213. The threshold values can at least comprise a predefined threshold for measuring the extent of the affected area 12131 and/or intensity of the natural catastrophe event 12132 and/or impact strength of the natural catastrophe event 12133. The inventive threshold triggering in combination with the inventive system allows a completely automated monitoring and measuring of the physical impact of a newly occurring natural catastrophic event 2 based on optical sensory measurements. Moreover, by converting the trigger signals in case of exceeding the predefined threshold value, the optical sensory-based systems 1 can e.g. also be used to provide a completely automated alarm system. If the system 1 e.g. further comprises electronical or at least electronically activatable alarm devices, as siren alarm devices and/or alarm lights, the system 1 can e.g. generate based on the predefined thresholds in case of detecting an occurring natural disaster event 2 an electronic signaling by an electronic signal generator 114 and transmit the electronic signaling to the alarm devices and/or siren alarm devices and/or alarm lights for activation of the alarm devices. This can be particularly useful (i) regarding natural catastrophe events with a spatial delayed propagation as e.g. flood events where flood in higher zones propagates time-delayed to zones lying closer to the sea level, or fire events where fire propagates typically in wind direction toward new regions, or (ii) regarding natural catastrophe events with a temporal delayed propagation, as e.g. earthquakes were the mainshock typically follows time-delayed preceding preshocks, or volcanic eruptions where volcano eruptions typically go through several stages beginning with earthquake swarms and gas emissions, then moving to initial steam and ash venting, lava dome buildup, dome collapse, magmatic explosions, more dome growth interspersed with dome failures and finally, ash, lava and pyroclastic eruptions. For such natural catastrophe events 2 with a spatial or temporal delay in propagation, the present inventive optical sensory-based system comprising automated signaling upon threshold triggering of measuring parameters of real-time or quasi real-time measured topographical maps 11110 with dynamic adapted event footprints 1111 is able to provide a reliable and more accurate automated alarm system 1, than the prior art systems are able to provide. Therefore, the natural catastrophe event footprint 2 can e.g. comprise a time series 11101 of measured digital satellite imagery 122, each digital satellite imagery 122 comprises an assigned measuring time stamps or time range 11102, wherein based on the time series 11101 of measured digital satellite imagery 122 dynamics of a propagation of the natural catastrophe event footprint 2 is measurably captured by the core engine 111.

Further, a quantified loss measure value 1114 can e.g. be generated by the core engine 111 for each of one or more of the land-based objects and/or structures 3 based on the measured impact measurands 1113 for a respective land-based objects and/or structures 3 the quantified loss measure value 1114 being given by the percentual portion of physical damage to a land-based objects and/or structures 3 weighted by the undamaged land-based objects and/or structures 3. In addition, a monetary equivalent value 11142 of measured quantified loss measure value 1114 of one or more of the land-based objects and/or structures 3 giving the monetary equivalent 11142 of the measured physical damage of the land-based objects and/or structures 3 can e.g. be generated by the core engine 111. Thus the impact measurands 1113 and/or loss measures 1114 can e.g. be generated representing quantified measures for an actual physical damage in case of the occurrence of the natural catastrophe event 2.

Inter alia, to generate the monetary equivalent measure 11142, digital representations 1116 of the land-based objects and/or structures 3 can e.g. automatically be assembled by the core engine 111. The digital representations 1116 are composed of digital object elements 11151 stored in an object elements library 1115. The monetary equivalent 11142 of the measured physical damage of the land-based objects and/or structures 3 is generated from an aggregated monetary equivalent of the digital object elements 11151 of a land-based object and/or structure 3 in relation to the measured physical damage of the land-based object and/or structure 3. To each of digital object elements 11151 stored in an object elements library 1115, e.g. monetary equivalent values can be assigned and/or dynamically updated. The aggregated monetary equivalent of the digital object elements 11151 of a land-based object and/or structure 3 can e.g. be dynamically generated based on the digital object elements 11151 of the object elements library 1115.

Further, one or more digital images 1119 of the land-based object and/or structure 3 can be captured by the digital ground system 11. The one or more digital images 1119 are automatically captured by the remote satellite sensors 121 and/or transmitted by an individual associated with the land-based object and/or structure 3 and/or captured from a database accessible via a data transmission network 13. By means of an identificator and locator unit 14, elements 34 of a land-based object and/or structure 3 can e.g. be identified by data processing of the one or more digital images 1119 based on the digital elements 11151 of the object elements library 1115 and located within the land-based object and/or structure 3. The core engine 111 assembles the digital representations 1116 of the land-based objects and/or structures 3 using the digital elements 11151 identified and located within the land-based object and/or structure 3. Automated pattern recognition can e.g. be applied to the one or more digital images 1119 by the identificator and locator unit 14 using automated pattern recognition for identifying and locating the digital elements 11151 within the land-based object and/or structure 3 based on processing the one or more digital images 1119.

### Risk-transfer application

In the following a method and an optical sensory-based system 1 for assessing property damage measures in case of a natural catastrophe event impact according to the invention is referred to as a Rapid Damage Assessment System (RDA). The RDA is described for an insurance use case, where an insurance company is interested in assessing damage measures and/or estimate values for one or more properties in an area affected by a natural catastrophe event.

The industry is facing increasing losses from natural catastrophes and associated operational challenges due to event impact uncertainty and sudden influx of large volume claims. Risk-transfer systems have to balance the urgency of rapid response to customers against lack of access to impacted areas and limited availability of adjusting resources. This puts the entire claims operations in significant financial and operational stress due to increase in Loss Adjustment Expenses (2X increase), Claims Leakage (3X increase) and Claims Cycle Time (5X increase).

The RDA system allows to support risk-transfer systems to effectively manage natural catastrophic claims and address the above mentioned challenges. The RDA system is an end-to-end automated natural catastrophic claims platform allowing claims managers and loss adjustors to make faster and smarter claims decisions from one platform during a hurricane

The RDA system supports 3 key phases across the event lifecycle:
1. Pre-Catastrophe Planning for effective CAT response strategy and appropriate expert system advices: RDA automatically monitors the probable impact to client portfolio with natural catastrophe modelling as the event progresses.
2. Post-Cat Planning for prioritization: The system allows to coordinate with satellite and aerial imagery users for post event imagery capture and the artificial intelligence engine of the platform determines individual property damage severity helping in prioritizing inspections.
3. The system provides automated remote claims triaging and assessment to minimize leakage and claims OPEX: Analyze impact to individual properties leveraging multiple filters available to create detailed loss reports for faster and accurate claims settlement outcomes

RDA system allows to leverage natural catastrophic modelling, imagery, weather, and property data, and augments it with deep Al algorithms to determine damage at every risk-exposed property level. It is then aggregated at portfolio (or other definable sets of risk-exposed objects) and other geographic levels to deliver damage assessment. The inventive probabilistic CAT modelling structure helps in estimating potential impact to a specific portfolio of objects before a hurricane makes landfall for users to start planning response. The inventive system procures post event images of impacted areas within 2-4 days from landfall and analyze the same to determine damage severity at portfolio as well as individual property level. This supports Claims Managers and Claims Adjusters in accessing relevant data at one place for faster and accurate processing of claims.

The inventive system has inter alia the advantage to (i) reduce claims OPEX: Mobilize CAT response users well in advance based on highly accurate predicted impact and deploy adjusting resources based on accurate assessment of damage severity. Minimize the need for field adjustment by enabling remote inspection of properties; (ii) reduce claims leakage: Prioritize and react faster to damages which have the potential of compounding losses. Reduce the risk of fraud and litigation with pre and post damage images of individual properties, and (iii) improve customer satisfaction: Support insurers with the ability to proactively reach out to impacted customers and reduce the claims cycle time by enabling claims teams in data driven adjustment.

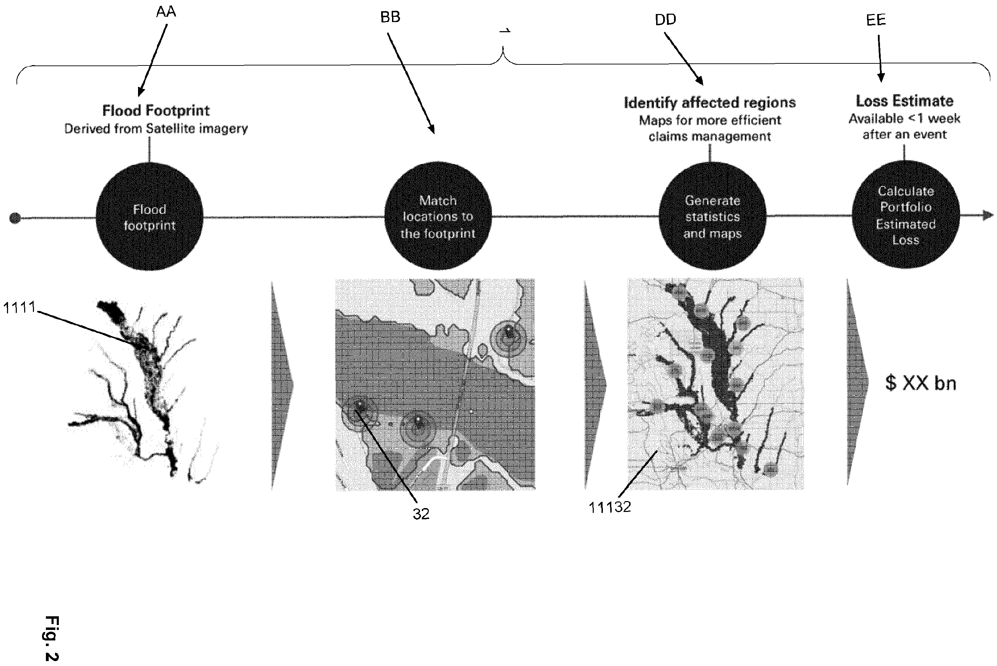

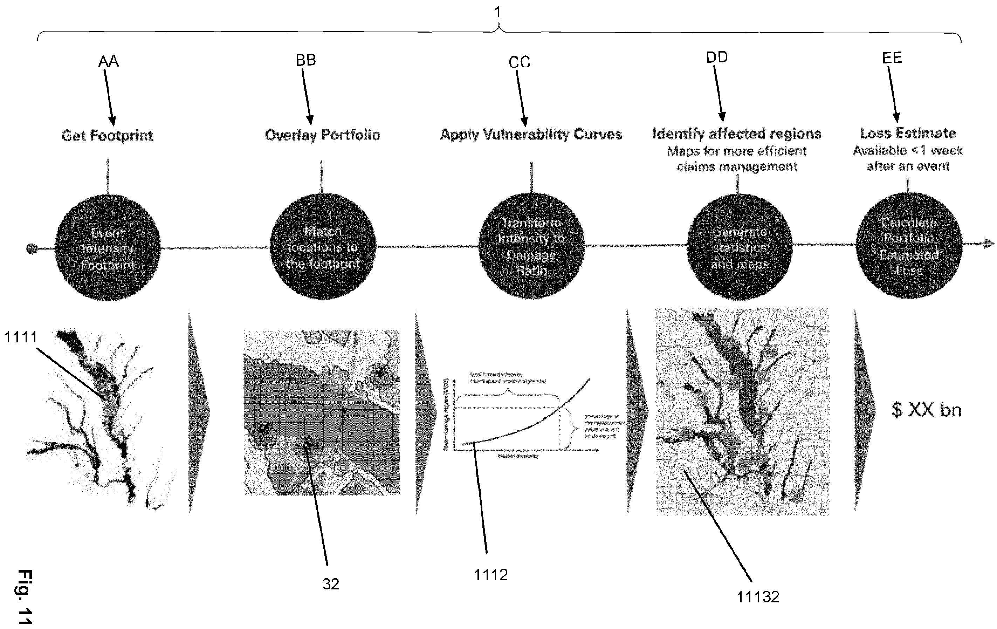

Figures 2 and 11 describe an example for a work-flow of a method for measuring and assessing property damage measures using an optical sensory-based system 1 according to the invention as it can be used for the example insurance technology to automate data processing. The diagrams in Figures 2 and 11 schematically illustrate the steps for providing fast and accurate quantified loss measures and estimates and actionable insights for the insurers after an occurred natural catastrophe event. In a step AA - for the sake of simplicity called footprint step - digital satellite imagery is received by a digital platform of the optical sensory-based system and a topographical map of a natural catastrophe event footprint 1111 is derived from the transmitted digital satellite imagery by a core engine of the optical sensory-based system 1. In figures 2 and 11 the footprint is an example of a flood footprint. In a step BB - for the sake of simplicity called localizing step - locations 32 of properties are matched to the footprint 1111 based on location information provided by the portfolio information of the insurer by the core engine. In a step CC - for the sake of simplicity called parameterizing step - as shown in figure 11, the core engine parameterizes a vulnerability curve 1112 representing a damage indicator per event intensity based on the natural catastrophe event footprint 1111. In the present example the vulnerability curve 1112 is parameterized based on the actual footprint 1111 and historic data about hazard parameters in the affected area and/or property damages in the affected area by the core engine. Based on the vulnerability curve the core engine generates damage measures values for one or more properties in the area affected by the natural catastrophe event which can be used by the insurers as early damage forecasts and for determining actionable measures. In the example illustrated in figures 2 and 11 affected properties are identified and indicated in appropriate impact maps 11132 in a step DD - for the sake of simplicity called graphical output step - are generated by the core engine. Further, quantified predicted and/or estimated loss measures are generated by the core engine for the portfolio a short time period after the event in a step EE - for the sake of simplicity called quantified output step.

In summary, figure 2 shows a diagram schematically illustrating the optical sensory-based system 1 as a Rapid Damage Assessment System (RDA) involving the steps of (i) capturing a natural catastrophe event footprint 1111, e.g. a topographical map of a flood footprint or a hurricane track footprint or some other type of hazard footprint, derived from satellite imagery; (ii) matching locations to the footprint based on the location information or extended portfolio information for example of the insurer; (iii) parameterizing of one or more vulnerability curves or a vulnerability model based on actual the footprint and damage indicators like historic data, measured hazard parameters or the like; (iv) identifying affected areas and generating statistics and appropriate maps; and (v) calculating estimated loss for the property or a property portfolio. The damage measures and/or estimate values can for example be generated shortly after the event (< 1 week). The method and the optical sensory-based system 1 provide quantified risk predictions and allow for more efficient claim handling.

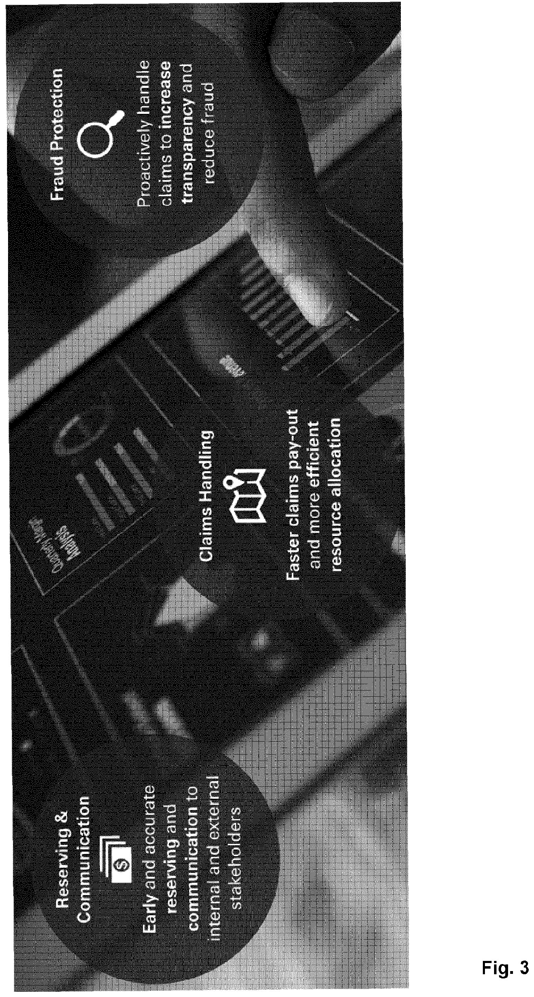

Figure 3 shows a diagram schematically illustrating benefits to the insurers and their clients by the RDA system. The RDA provides early and accurate reserving and communication to internal and external stakeholders of the insurers. Resources can be allocated more efficiently and claims are paid-out faster. Transparency of claim handling is proactively improved and fraud is reduced. These benefits are achieved by the data-driven vulnerability curve modelling of the RDA allowing for example a quick assessment of an estimated percentage of the replacement value for the property that will be damaged by the observed natural catastrophe event.

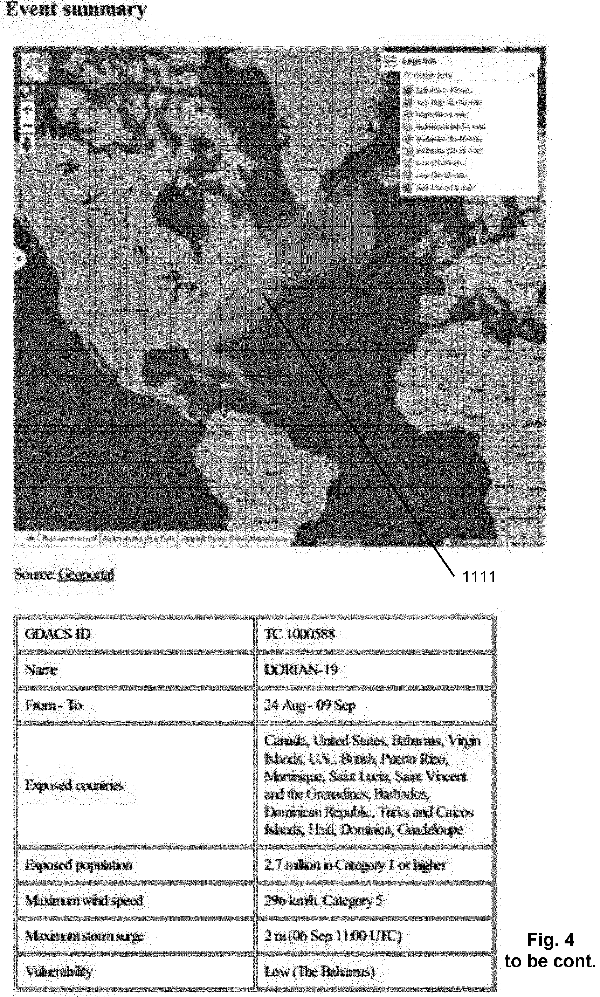

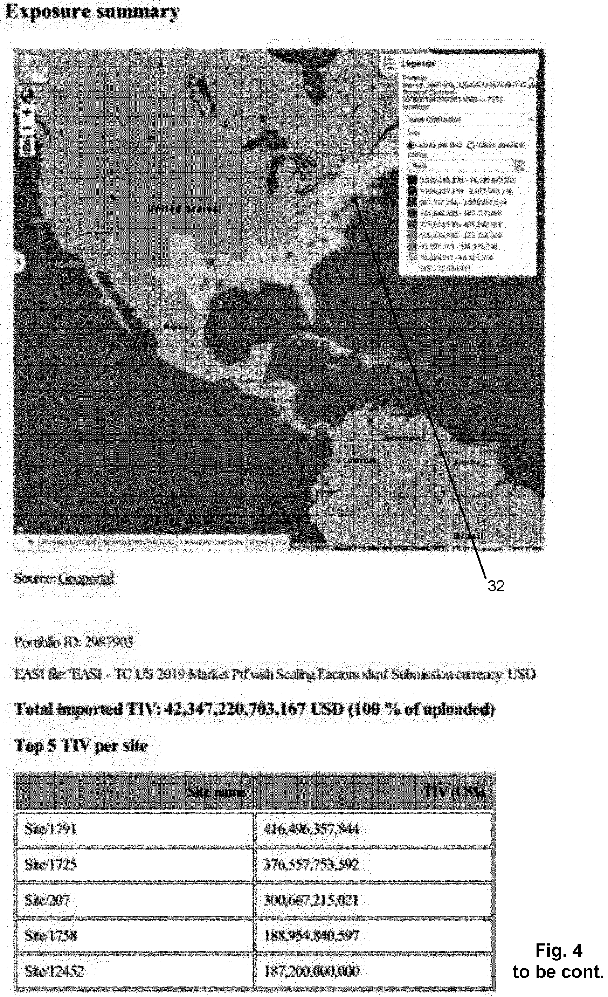

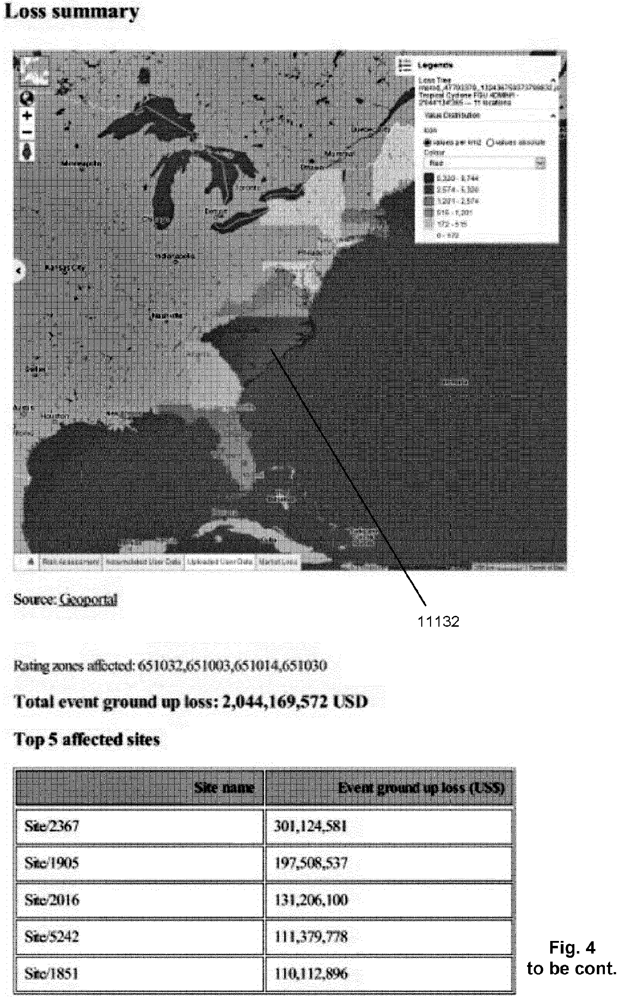

Figure 4 shows a diagram schematically illustrating an exemplary user interfaces to the RDA system providing exemplary reports for the tropical cyclone Dorian in 2019. The user provides portfolio information including location information about properties of interests as input to the digital platform. As output the user receives reports illustrating the event footprint 1111 as event summary, the locations of properties 32 of the portfolio as exposure summary, and the monetary and physical loss information as loss summery visualized as an impact map 11132. The event summary for this natural catastrophe event further provides information about the time of the event, exposed countries, exposed population size, maximum wind speed, and a vulnerability level. The exposure summary provides a quantified value of the total of properties in the portfolio and the top 5 properties in the observed region. Note, that the area affected by the natural catastrophe event is smaller than the region covered by the location information for properties of the portfolio. The loss summary indicates the total event loss and the top 5 affected properties.

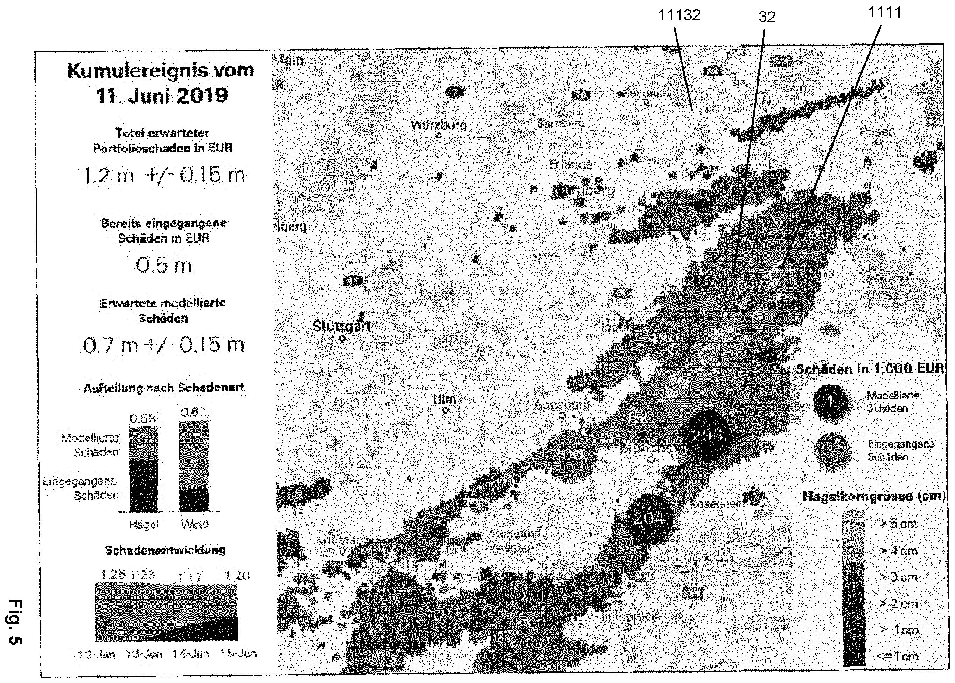

Figure 5 shows a diagram schematically illustrating an exemplary user interfaces to the RDA system providing an exemplary impact report connecting the RDA system to a CatNet (Catastrophe Net) tool and/or other tools (SR) of the user. RDA functionalities can be included into existing digital tools such as a CatNet tool or HOMA tool. Further, the system can provide a drill down to high resolution functionality (depending on peril). For example, the CatNet tool (short for Catastrophe Network tool), provides an internet service offering users comprehensive information on natural hazards worldwide. CatNet enables users to gain a fast overview of natural perils by means of an electronic atlas. It provides easy access to up-to-date maps, showing the most relevant perils worldwide. The tool helps to estimate more accurately the risks for any location on earth, which is particularly useful for the insurance industry. CatNet is composed of an electronic atlas, country-specific insurance portfolio information and loss event data. The took can be used to provide location data to the RDA. Further, results and reports may be integrated into the CatNet tool to be displayed in the context of the CatNet user interface.

Figure 5 shows an example of RDA outcomes illustrated by the CatNet tool. A display shows a topographical map of the natural catastrophe event footprint 1111 for the area affected by the natural catastrophe event in form of hailstorm, which was derived from satellite imagery of the hailstorm. The footprint is overlaid on an impact map 11132 illustrating the region of the property portfolio. Different colors in the footprint indicate different sizes of hailstones, wherein dark blue is about 1 cm of diameter and yellow is over 5 cm of diameter. The distribution and density of hailstones of a specific size may serve as damage indicator. Property locations 32 are identified and summarized in circles indicating the number of properties. For several properties damage reports have already been received, which can be indicated by the color of the property circles. These damage reports may serve as damage indicators for parameterizing a vulnerability model for properties in the affected area. The vulnerability model is used to generate estimated damage values for one or more properties in the area affected by the hailstorm before a damage report was received. In the present example, the loss value of already received damages is 0.5 million Euro, and the estimated loss is 0.7 million Euro, which sums up to 1.2 million Euro of estimated damage for this natural catastrophe event.

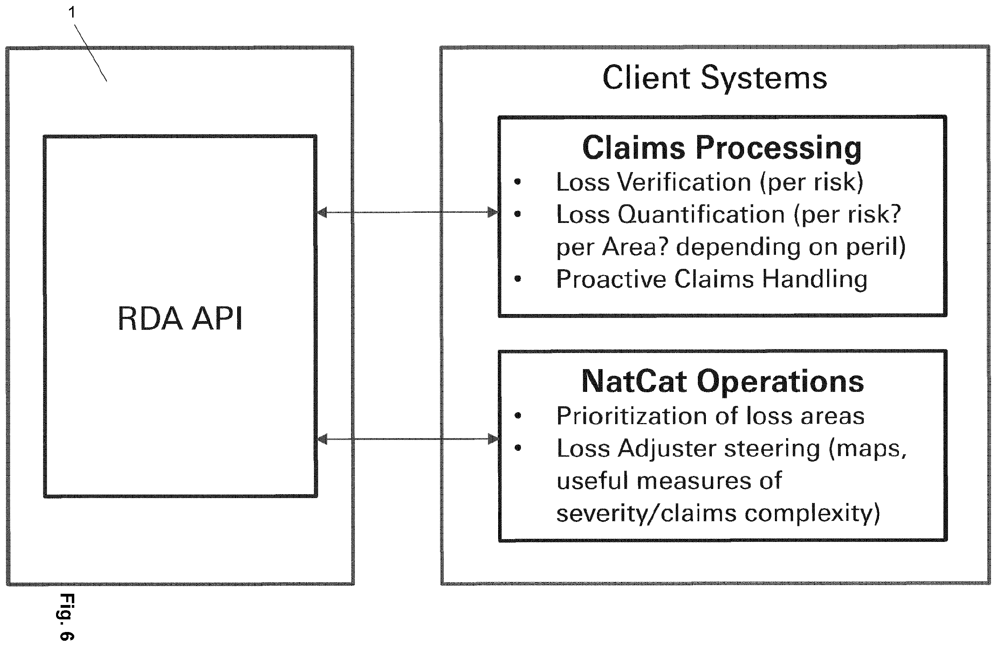

Figure 6 shows a diagram schematically illustrating an exemplary user interfaces to the RDA system providing external API. The RDA functionalities can be integrated via external API into user workflows. The example of Figure 6 shows the RDA system as a system maintained by a system provider, and a user system including other tools as for example the NatCat tool and a claim processing tool. The user system tools can interact with the RDA system 1 to provide location and portfolio information, existing damage indicators, hazard parameter information and more to the RDA. The user system 6 may receive the the natural catastrophe event footprint, information about the vulnerability curve and the damage measures and/or estimate values for one or more properties in the area affected by the natural catastrophe event generated by the core engine of the RDA. Further, the RDA can provide impact maps 11132 and damage statistics to the tools of the user system 6. Using the information from the RDA, the user system 6 can improve the claim handling process by verifying a loss per risk, quantifying a loss per risk and per area depending on the peril arising from the natural catastrophe event and can proactively process the claim handling. The NatCat tool may receive information about a prioritization of loss areas and improve loss information based on the impact maps 11132 and hazard information of the RDA.

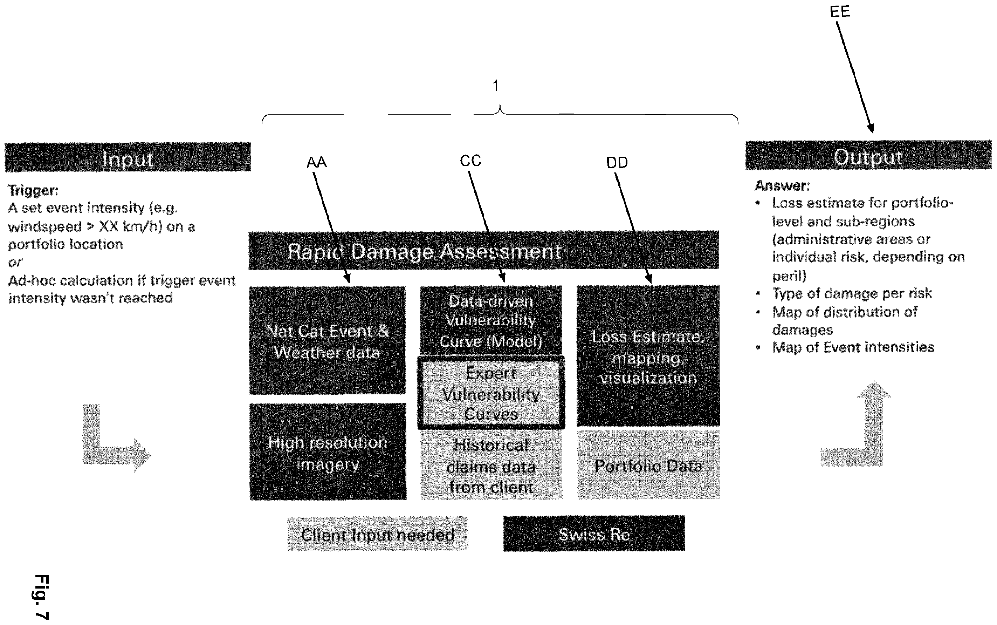

Figures 7 to 9 show diagrams schematically illustrating an exemplary overview of the used methodology of the RDA system.

Figure 7 shows a diagram schematically illustrating an exemplary high-level architecture. The optical sensory-based system 1, providing the RDA functionalities, receives digital satellite imagery of an area affected by a natural catastrophe event and weather data further characterizing the natural catastrophe event, and derives a topographical map of a natural catastrophe event footprint for the area. The core engine parameterizes a vulnerability curve or model based on the natural catastrophe event footprint damage indicators. In this example, the damage indicators are provided as expert opinions and historical claims data. Further the optical sensory-based system 1 receives location information about properties in the affected area from a user of the RDA system. The RDA system may be configured to generate damage measures and/or estimate values for properties in an area in which a trigger event parameter has been reached or exceeded. For example, only properties in an area of a minimum windspeed are represented in an RDA report. Alternatively, the RDA report can be generated for all properties identified by location information in the affected area. As output information the RDS system may provide loss estimates for portfolio-level and sub-regions, maps of distribution of damages, maps of event intensity and more.

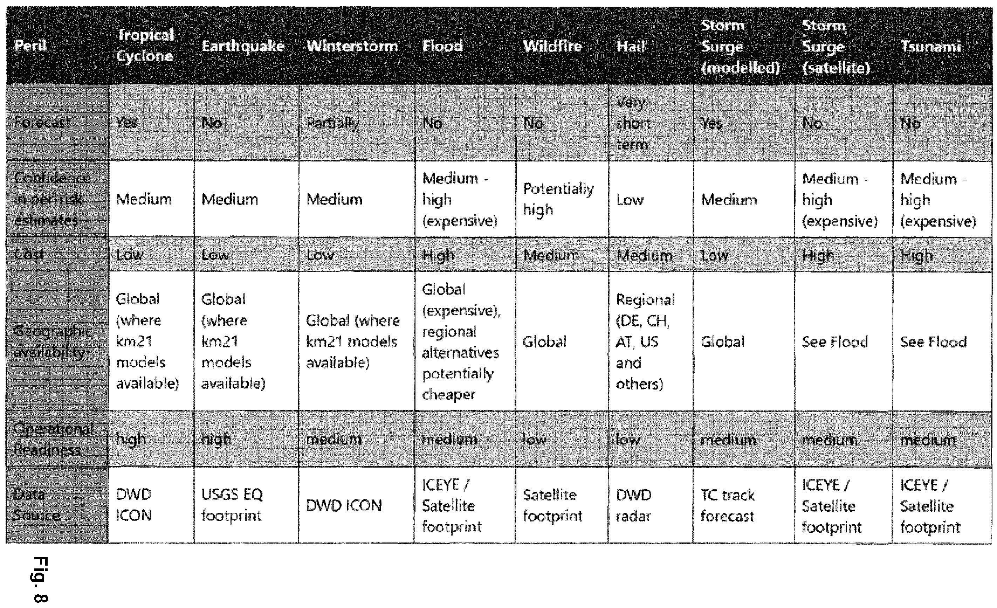

Figure 8 shows a diagram schematically illustrating peril information of various hazardous events for the footprint step A.

The table of Figure 8 shows sources of event intensity footprints used for the RDA. Some taken as-is from a vendor or governmental source, others are generated in-house (e.g. the tropical cyclone footprints). Another source can be observed damage footprints. For these, before and after imagery is analysed to determine a "damage degree" based on the change in the imagery. For this step high resolution SAR or optical imagery are used.

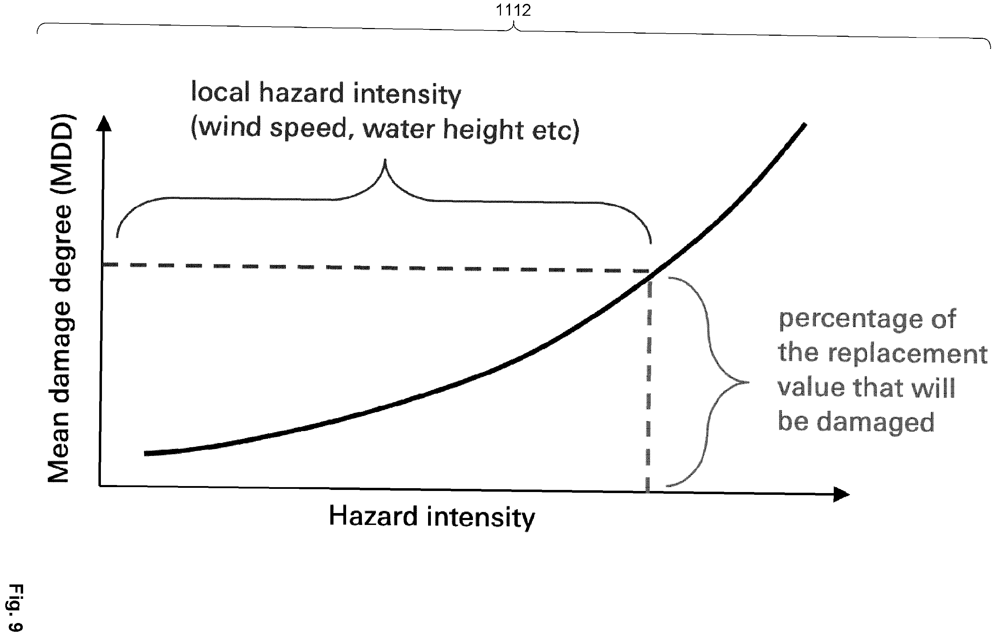

Figure 9 shows a diagram schematically illustrating a parameterizing step C for generating a vulnerability curve - defining a hazard intensity / damage degree ratio. The hazard intensity can be derived from the natural catastrophe event footprint and the satellite imagery, respectively. Further the hazard intensity may be characterized by and one or more hazard parameters for locations of the topographical map, wherein the hazard parameter may for example indicate a windspeed, rainfall intensity, water height, hale intensity, hale size, temperature (particularly below 0 °C), earthquake intensity, storm surge, avalanche, mud slide, tsunami, terrain incline and/or wildfire. The damage degree may be indicated as a mean damage degree to simplify the quantification of damage measures and/or estimate values. The damage degree may for example be provided by information about size, quality, age, type of structure, coverage and/or occupancy of the properties in the affected area or in the provided portfolio information for properties in a region including the affected areas. It may be based on past damage information defining property damages resulting from natural catastrophe events in the past, which may also include information about the past event/hazard intensity, on an expert opinion about a damage level at a specific event/hazard intensity, existing loss data, literature review, damage survey reports, and/or on comparing data imagery of the property before and after the natural catastrophe event as described above. The vulnerability curve may be a simple regression curve or a model including a variety of damage indicators and hazard parameters.

As shown, the vulnerability curve of Figure 9 transforms the hazard intensity into a damage degree represented by a percentage of the replacement value. In the given example the vulnerability curve increases exponentially, indicating that the damage degree increases faster the higher the hazard intensity is.

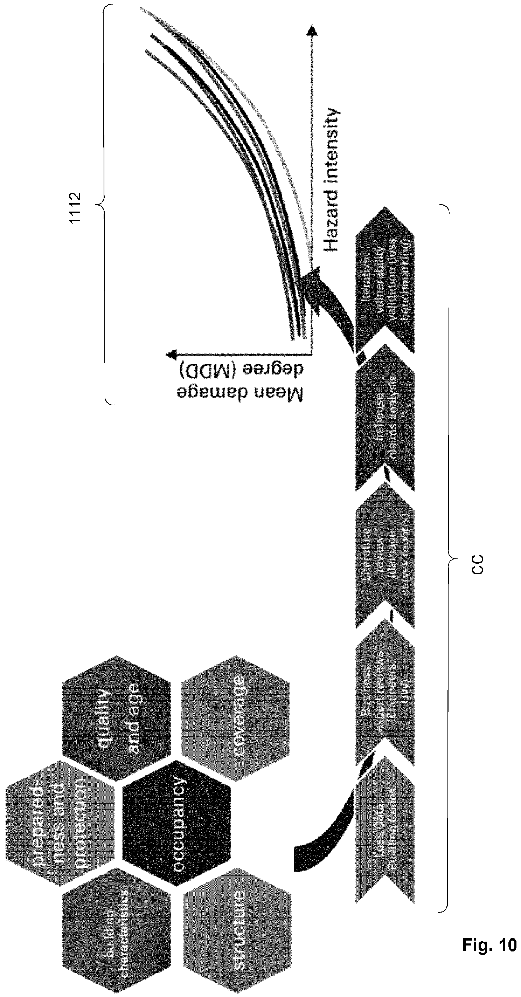

Figure 10 shows a diagram schematically illustrating another aspect of the parameterizing step C focusing on the selection of the relevant property characteristics and damage indicators for the vulnerability curves. In the illustrated example, the vulnerability curves can e.g. be based on 3 sources: (i) Expert Driven: Vulnerability curves can be based on expert judgement from an accredited expert regarding which intensity translates to how much damage (indicated for example as "Damage Degree", as a percentage of the total value); (ii) Industry set: For some countries and perils, there might be an industry standard. E.g., in Japan the Insurance Association might say that a flood depth of >=45cm at a property translates to at least 50% damage degree, and (iii) Data Driven: If enough historical and granular claims data is available, vulnerability curves can be extracted or calibrated based on this data. As shown in figure 10, several vulnerability curves can be illustrated in one diagram. Alternatively, the several curves can be combined in a vulnerability curve.

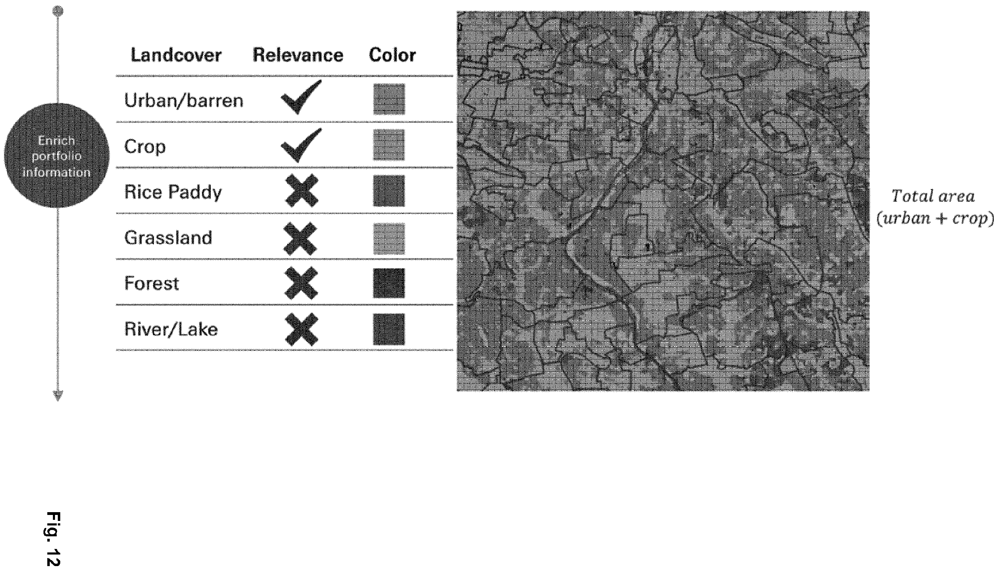

Figure 11 is based on figure 2 and shows a diagram schematically illustrating the inventive RDA loss estimation methodology step by step. Ideally, to get a loss estimation, the mean damage ratio of each insured risk gets multiplied with its sum insured, and then all individual risk loss estimates summed up to get the portfolio loss. This is usually not so straight forward due to a variety of reasons which have to be accounted for: (A) The portfolio information provided might only give aggregated portfolio information (e.g., on municipality level) meaning we have to take assumptions around where in a municipality the insured risks are located. This can be done e.g. via landcover assumptions (as illustrated in Figure 12); (B) A footprint might not be of very high resolution (e.g., earthquake shake maps are usually 1km x 1km resolution, making it impossible to get an accurate reading at a specific location); (C) The same intensity peril does not always lead to the same damage ratio. E.g., during a windstorm one risk might be affected by a falling tree, while the neighbouring house does not - this means results have to be presented at a resolution that makes sense; and (D) The footprint might not reflect the maximum intensity, e.g. a flood footprint might be taken before or after peak flood extent, leading to under-reporting the intensity. This can be accounted for in the uncertainty when parameterizing the vulnerability model.

Figure 12 shows a diagram schematically illustrating the localizing step B as a case study: Flood in Japan where "Sum Insured" is only given per municipality - use 3^{rd} party landcover information. To enrich the portfolio information this aggregated data can be broken down by the RDA system using additional information from the satellite imagery, for example. The municipalities can be split up in urban sections and in crop section, thus providing more detailed property information.

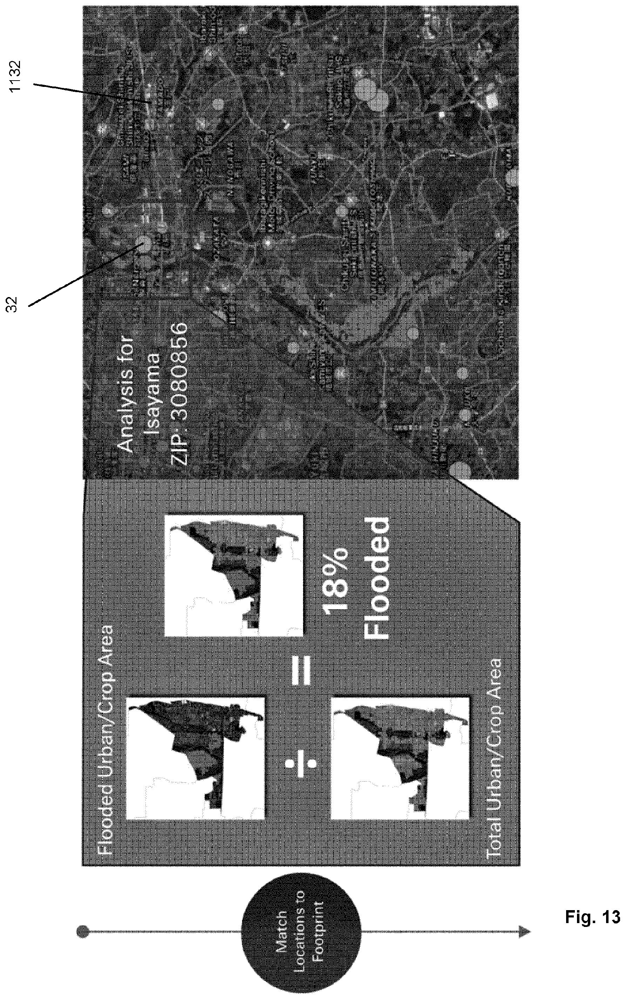

Figure 13 shows a diagram schematically illustrating the localizing step B as a case study: Flood in Japan where "Sum Insured" is only given per municipality, not per each risk. Using the satellite imagery, the natural catastrophe event footprint can be applied to the region of interest and the ratio of affected area to non-affected area can be indicated. Further, the ratio of impacted crop and urban sections can be determined.

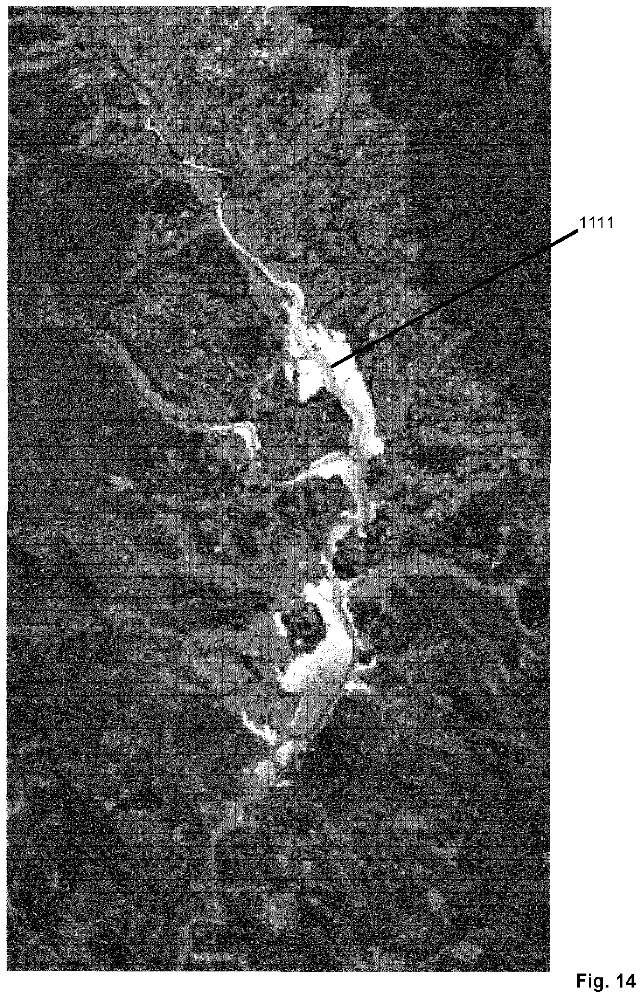

Figure 14 shows a diagram schematically illustrating an exemplary satellite imagery picture of the Japan floods 2020. The picture shows the natural catastrophe event footprint as flooded areas and the distribution of buildings and constructions in the flooded valley. Using the location information properties located in or near the area affected by the natural catastrophe event can be identified. Using the vulnerability curve indicating a damage degree to be expected for the hazard intensity as derived from the satellite imagery ana further parameters can predict a damage measures and estimate values for the properties expected to be impacted by the flood.

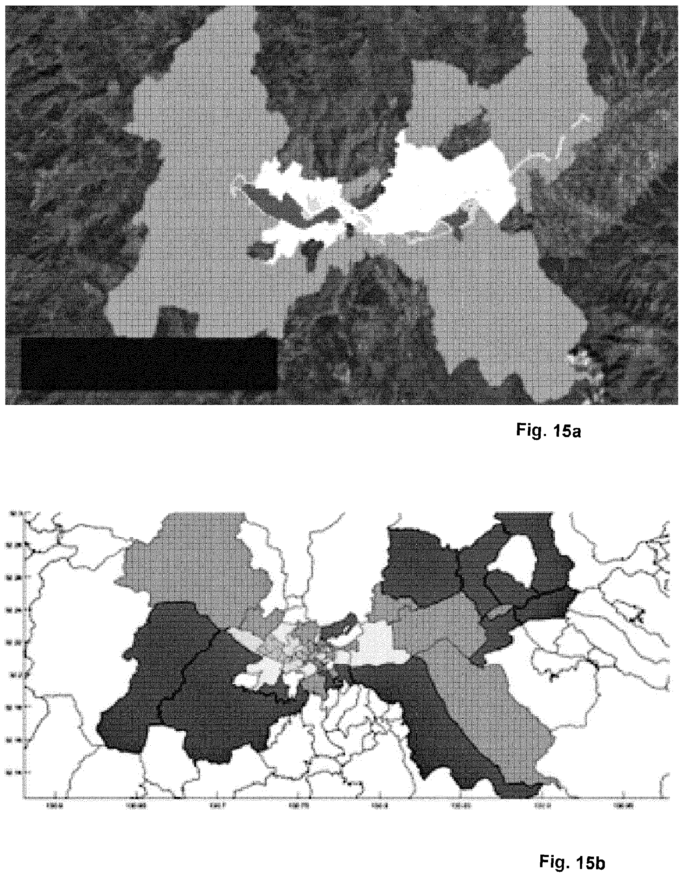

Figure 15 shows a diagram schematically illustrating an exemplary ICEYE imagery example case. ICEYE is a satellite manufacturer and operator providing and measuring accurate flood footprints right after an event. Figure 15a shows the diagram illustrating an exemplary satellite imagery with an overlay of a natural catastrophe event footprint manually added to the imagery. Figure 15b shows a diagram schematically illustrating a topographic map derived from the satellite imagery of figure 15a with the natural catastrophe event footprint automatically derived by the RDA method of the invention indicating classified property areas. A successful test of the RDA system has been executed on a flood in Japan (as illustrated in figure 14). For many perils where no established models are available (or where they cannot easily be used for a "per event" assessment), a satellite footprint is often one of the best options to assess the impact and damages after a natural catastrophe event. This applies for example to Wildfire or Flood but also to other hazardous events. Therefore, it is sometimes required to interact with the providers of such information in order to obtain an event footprint. There is a huge number of remote sensing companies, ranging from pure data providers to pure service companies, with companies offering both in between. To facilitate the interaction with such companies, a list of companies can be put together, a template for questions to be asked, as well as assessment criteria to define whether it is worthwhile to pursue a contact or not. Whatsoever, a tailor made satellite footprint for an event can be quite expensive. For a high quality flood footprint, the costs are typically in the range of USD 50'000 - 100'000, and this needs to be planned well ahead in order to have a footprint available at the peak of the flood.

Thus, the method for assessing property damage measures and/or estimates in case of a natural catastrophe event impact is based on an architecture for a possible implementation of an embodiment of the optical sensory-based system 1 for providing fast and accurate quantified loss measures and estimates and actionable insights for insurers after an occurred natural catastrophe event.

The inventive digital Rapid Damage Assessment system provides fast and accurate loss estimates and actionable insights for insurers after a natural catastrophe event. The basis for the Rapid Damage Assessment system is given by the location or portfolio information of a user like for example an insurer. Starting from this information, the system generates loss estimates, corresponding graphical maps of events and the portfolio impact after large disaster events by tracking natural catastrophe events. As shown by figures 2 and 11, the Rapid Damage Assessment system involves the steps of (i) capturing a NatCat footprint, e.g. a topographical map of a flood footprint or hurricane track footprint, derived from satellite imagery; (ii) matching locations to the footprint based on the portfolio information of the insurer; (iii) parameterizing of vulnerability curves based on actual footprint and historic data; (iv) identifying affected regions and generating statistics and appropriate maps (allowing more efficient claim handling); and (v) calculating estimated loss for the portfolio shortly after the event (< 1 week).

In summary, as illustrated by figures 2 and 11, the Rapid Damage Assessment (i) provides fast and accurate loss estimates and actionable insights for insurers after a natural catastrophe event, (ii) takes an insurers portfolio information, tracks NatCat events, and calculates loss estimates and visualizes maps of events and the portfolio impact quickly after the disaster, and (iii) does so by combining dedicated risk modelling experience, portfolio data analytics expertise and profound understanding and partnerships with 3rd party data providers. With this a system is built enabling insurers globally to react faster to disasters.

Imagine a large Hurricane is approaching the coast, and one of risk-exposed users has a large number of risks in the area where the storm is expected to make landfall. Then it will be interesting to assess the expected loss on this portfolio after - or even before - the Hurricane makes landfall. It is further important to understand which of the locations in the portfolio are expected to suffer the largest losses. Such information can also be used to improve claims management. The RDA system and method provides users with the means to quickly answer some of the most pressing questions during a natural catastrophic event in an automated and standardized way.

The system provides an automated generation of an event report for predefined portfolios for tropical cyclones and earthquakes, as soon as they occur. Event report can e.g. contain: (i) Event information with general event information and/or visualization of event footprint, (ii) Portfolio information with visualization of portfolio, and (iii) Loss information with expected portfolio loss, locations with highest loss, and visualization of loss map. The system is also able (a) to generate a similar report for other perils (e.g. flood or wildfire), if a satellite footprint of the event is available. However, this is not yet fully automated. See below for the current state of capabilities, (b) for non-automated runs on a specific portfolio in MultiSNAP, please check out the information about the Nat Cat Event Footprint capabilities.

It is to be noted that the inventive system and platform is able to provide full integration in a Geo architecture and to offer e.g. via a user portal full automation of other perils than earthquake and tropical cyclones. The system also allows easy integration and addition of new footprint sources (e.g. wind footprints from Meteomatics) and new perils (e.g. modelled storm surge based on the track forecast).

This description and the accompanying drawings that illustrate aspects and embodiments of the present invention should not be taken as limiting the claims defining the protected invention. In other words, while the invention has been illustrated and described in detail in the drawings and foregoing description, such illustration and description are to be considered illustrative or exemplary and not restrictive. Various compositional, structural, and operational changes may be made without departing from the spirit and scope of this description and the claims. In some instances, well-known processes, structures, and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

Furthermore, in the claims the word "comprising" does not exclude other components or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. Any reference signs in the claims should not be construed as limiting the scope.

The method for assessing property damage measures and/or estimates in case of a natural catastrophe event impact can be realized as a computer program, which may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Furthermore, a computer program can also be a data structure product or a signal for embodying a specific method such as the method according to the invention.

As described above several aspects, components and steps of the optical sensory-based system 1 and the method for assessing property damage measures and/or estimates in case of a natural catastrophe event impact according to the present invention are based on technical considerations and concepts as for example satellite imagery technologies, measuring of real world parameters representing hazardous events, damage assessments using optical and sensor technologies to identify damage degrees and damage characters, remote sensing and imaging devices for assessing of property locations, automation technologies to integrate data information in existing portfolios and more.

### Process to get the Pre and Post-event pictures

An important part of the inventive system is the inventive process to get the pre and post-event pictures.
***(i) Identify the coordinates of insured building***
   ***Input:*** The process can start with customers providing their portfolio data which consists of addresses of each insured risks in the portfolio along with the Zip codes.
   ***Process*:** The process comprises primarily 2 steps:
      - Address verification: Input address is matched against a reference data to confirm validity and deliverability and then the address is standardized to local postal standards
      - Geocoding: Geocoding is done at street address level where the street network is already mapped within the geographic coordinate space. Each street segment is attributed with address ranges. Geocoder takes an address, matches it to a street and specific and then interpolates the position of the address.
   ***Output:*** The output signaling usually gives the centroid lat/long of a land parcel for the given address
   In case there is no absolute match of the input address with reference address database, there are some interpolation rules which are used to identify the approximate coordinates of an address. RDA uses precisely for geocoding.
***(ii) Create* a *building footprint database***
   ***Input:*** Addresses of insured risks as part of the registered portfolio in RDA.
   ***Assumption and boundary condition:*** A residential building might have the main structure and then ancillary structures (like garage, garden shed, guest house etc.). It is assumed that residential buildings do not have more than 3-5 building footprints in a land parcel. Commercial buildings on the other hand can have many building footprints in a land parcel as it comprises of multiple smaller structures.
   ***Process*:** The process differs for residential buildings and commercial buildings. The system can e.g. use Ecopia as building footprint data provider.

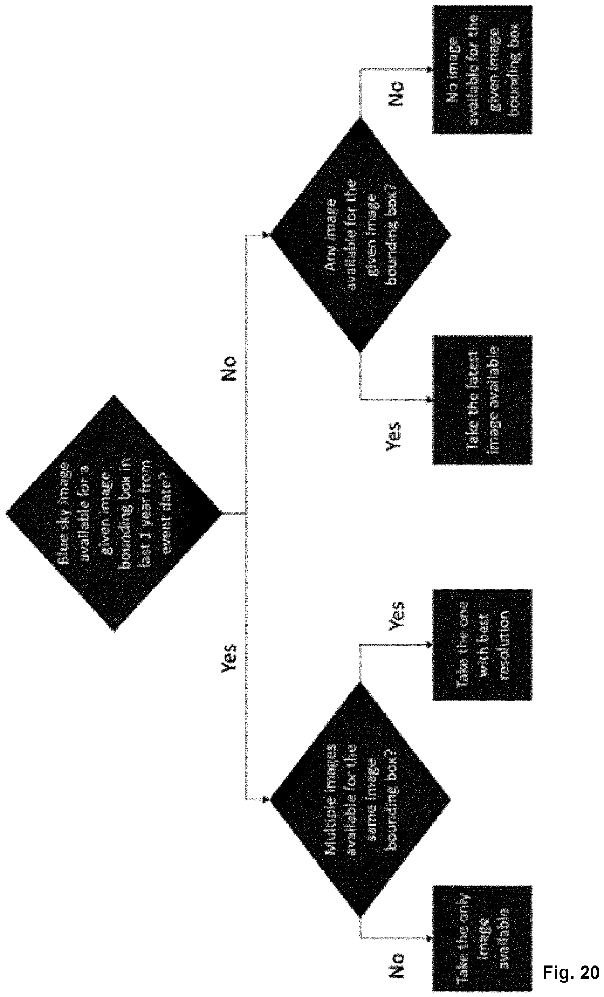

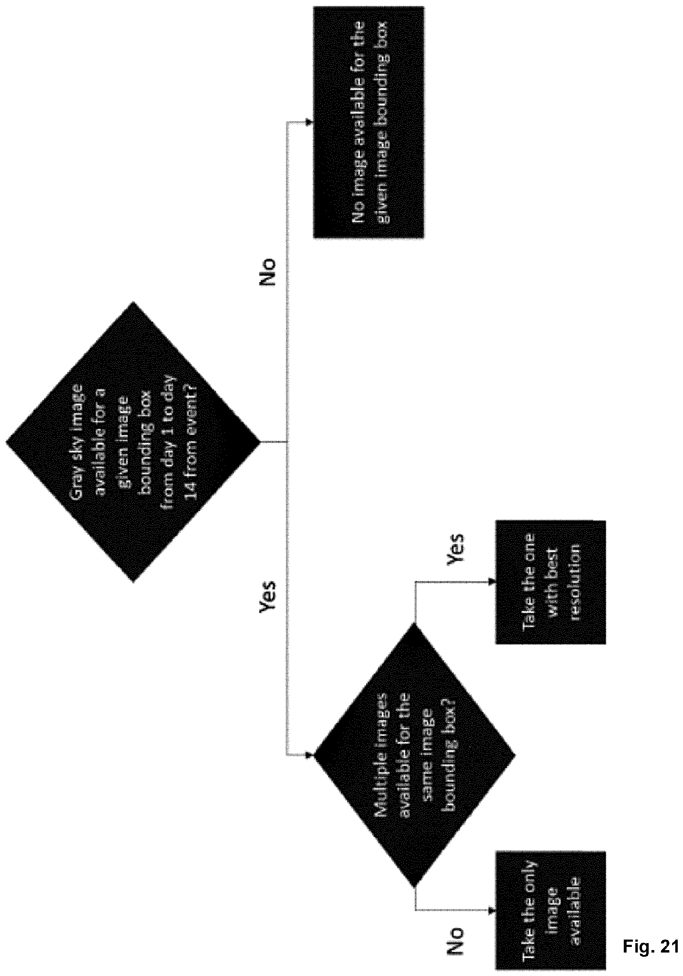

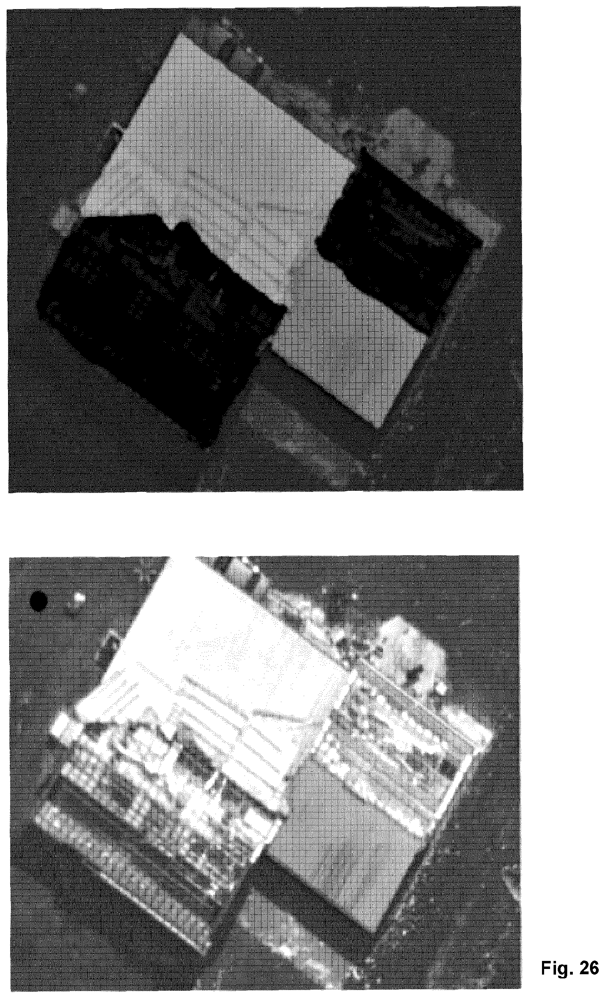

   1. Residential buildings:
      a) If for a given address, number of building footprint is less than or equal to 5 in a given parcel. Combine all of them together to create one combined polygon (technically known as multi-polygon) having one unique identifier
         ***Output:.*** Coordinates of the multi-polygon and centroid lat/long for the multi-polygon.
      b) If for a given address, number of buildings is greater than 5, split all of these addresses into individual polygons with unique identifiers for each of these split polygons separately.
         ***Output:*** Coordinates of each individual polygons and centroid lat/long each of these individual polygons. This is done to handle potential errors in the portfolio where a commercial building is categorized as residential building as well as incorrect collection of building footprint data.
   2. Commercial Buildings:
      a) Irrespective of the number of building footprints, combine all building footprints into one combined polygon having one unique identifier.
      ***Output:*** Coordinates of the multi-polygon and centroid lat/long for the multi-polygon
***(iii) Create the image bounding box to retrieve images***
   ***Input:*** Lat/Long from Geocoding and Centroid Lat/Long from Building footprint data.
   ***Assumption and boundary condition:*** Address geocoding is more accurate than determining building footprint for a given address.
   ***Process:***
      1. For a given geocoded lat/long identify the number of matching centroid lat/long from building footprint database within 200 meters. If there are multiple matches, take the closest one
      2. Calculate the diagonals for the identified building footprint from the above step
      3. Expand the largest diagonal on both sides by 50% to create an extended rectangle so that the building of interest is completely captured in the extended bounding box
   ***Output:*** Coordinates of the extended rectangle which is considered as image bounding box
***(iii) Create the image bounding box to retrieve images***
   ***Input:*** Image Bounding Box
   ***Assumption and boundary condition:*** One location can have multiple pre and post event images
   ***Process:***
      1. Pre-event Image (Technically called blue sky image). Recency and resolutions are key considerations to get the best image (see figure 20).
      2. Post-event image (technically also referred to as Gray sky image) (see figure 21).
   ***Output:*** High resolution aerial imageries (Blue sky and gray sky) for the given image bounding box.
   As an embodiment variant, the system can e.g. capture high resolution aerial imageries (7.5 cm - 20 cm resolution) e.g. from Vexcel. However, the same process can be replicated for other form of imageries such as satellite, drone etc.
   ***Process* to *detect damage severity based* on *Aerial Imageries***

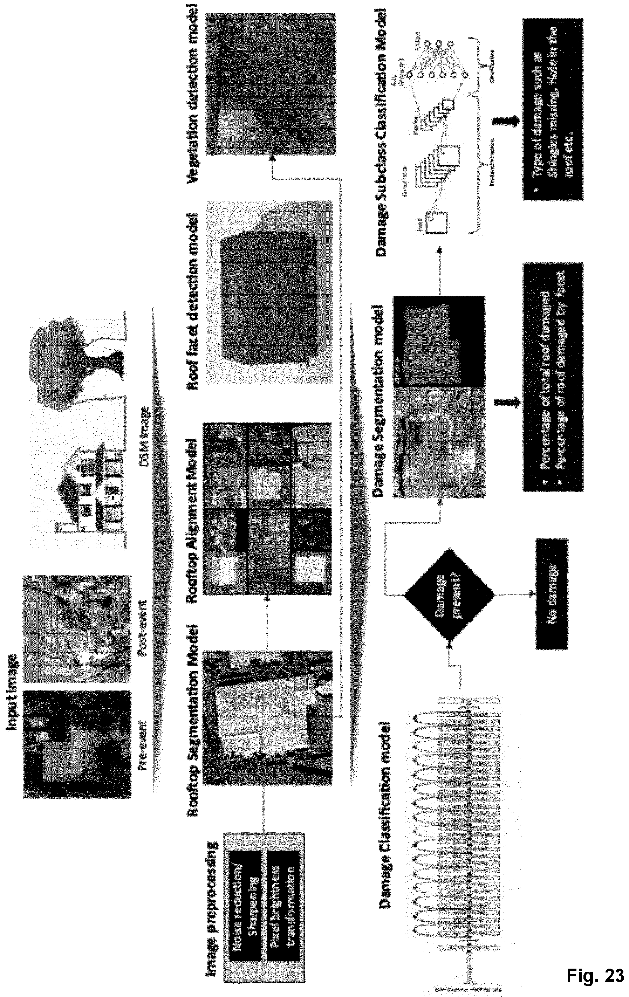

   Figure 23 illustrates an embodiment variant of a high level damage detection model architecture.
***(i) Damage Classification: Damage severity at an overall building level***
   ***Technical objective:*** Model is trained to classify buildings into classes, e.g. 5 classes of damage severity which e.g. are No damage, Minor, Moderate, Major and Complete Damage
   ***Input:*** a) High resolution Pre-event and Post-event optical aerial imageries for a given insured building. These are ortho imageries (i.e. top view images), b) DSM Images which gives the elevation of all objects within an image.
   ***Process:***
      1. Image Pre-processing - Image processing is done to remove noise in the data and also to account for different lighting conditions in which pre-event and post-event images were captured and also detect shadows in the images. Noise reduction or sharpening, pixel brightness transformations, color space transformation are some of the pre-processing techniques used
      2. Rooftop segmentation - Image segmentation model is used to determine the area of interest in the images for comparison which is the rooftop of a building. Non-contextual thresholding techniques are used to segment out the rooftop from the rest of the image which consists of parcel land, vegetation etc.
      3. Alignment of rooftop footprint on both the images - The area of interest i.e. the rooftop of a building might not be in the same position in pre-event and post-event image. This can lead to errors in damage classification. Geometric transformation techniques are used to reposition the pixels in the post-event image and align it with pre-event sky image.
      4. Vegetation cover detection - In many cases after a catastrophic event, the trees beside the building might fall on top of the roof and cause damages to the building. However, from ortho images, fallen trees and hanging trees might look very similar. Elevation model using DSM images are used to determine whether a tree is fallen on the roof or hanging on top of the roof.
      5. Detect damage class - Resnet architecture is used to detect the changes in post-event image as compared to pre-event image and determine the damage class
   ***Output:*** a) Processed image, b) Rooftop footprint, c) One of the five damage severity classes along with confidence score. If the rooftop is majorly covered by vegetation, then it is classified as "background".
***(ii) Damage Segmentation: Detection of localized damaged* segments of *the roof***
   ***Technical objective:*** Highlight the part of the roof that is damaged and determine the percentage of roof that is damaged
   ***Input:*** a) High resolution Pre-event and Post-event optical aerial imageries for a given insured building after image pre-processing, b) Rooftop segments i.e. bounding box of the rooftops.
   ***Process:***
      1. Segment an image into 3 classes which are undamaged part of the rooftop, damaged portion of the rooftop and surrounding area in the image outside rooftop.
      2. Pixel wise classification - ConvNext technique is used to do pixel level comparison between pre-event and post-event images. For example, 6 channels are used.
      3. Determine the facets in the roof (see figure 25) - While the above step gives the damaged area of the entire roof, it does not give details on which facets are damaged and which are not. There are 2 ways roof facets are detected: a) DSM images - From the DSM images, elevations of different sections of the roof are identified which is then used to segment out multiple facets; b) Machine-learning model - When DSM images are not available, CNN architecture is used to determine the various segments of the roof. This approach may be less accurate hence DSM imagery-based approach may be preferred.
      4. Generate the percentage of area damaged - This is generated based on the number of pixels in segmented into damaged class and number of pixels segmented into undamaged roof class.
   ***Output:*** a) Damaged segments of the roof i.e. the pixels which are identified as damaged part of the roof, b) Percentage of overall roof that is damaged, and c) Percentage of damage by each facet (see figure 26).
***(iii) Damage Sub-Class Classification: Detect the type* of *damages***
   ***Technical objective:*** Determination of the type of damage i.e. shingles missing, holes in the roof etc.
   ***Input:*** a) Post-event image with 3 classes from damage segmentation model (Damaged segment of the roof, undamaged segment of the roof and background), b) Damage class from damage classification model.
   ***Process:***
      1. Take individual continuous damaged segments to analyze damages in that segment. ResNet and GoogleNet architectures are used to determine the damage sub-class
      2. Damage sub-class hierarchy is created based on their severity. In case there are multiple type of damages in a given segment, the higher class is considered as the damage type. Example: Damaged segment has both shingles missing and hole in the roof, then output will be hole in the roof which is at a higher level in hierarchy owing to its severity
      3. Contextualize based on Damage class and roof types - In order to get better accuracy in prediction and eliminate false positives, type of damages to be identified depends on damage class and roof type. For example, for Minor damage class, it is highly unlikely that there will be hole in the roof and hence only shingles missing, tarp visible, debri etc. are looked for in the damage segment. Similarly, if the roof is a metal roof there will not be any shingles missing
   ***Output:*** Damage sub-class which represents damage type
***(iv) Configuration of Damage Severity***
   ***Technical objective:*** Damage severity definition varies from insurer to insurer and based on the state where the insured building is. Customers should be able to define damage severity based on their internal business definitions
   ***Input:*** a) Percentage of overall roof damaged, b) Percentage of damage by facets, c) Damage sub-class i.e. type of damage, d) Property characteristics, e) Geographic details of an insured building.
   ***Process:***
      1. Rules engine is set up based on the above input parameters which calculates the damage severities for individual insured buildings. For example, if roof material is shingles & distance to coast is < 100 meters & building in florida & %roof damaged >25% then Damage severity = "Major".
   ***Output:*** Damage severity based on rules set up.

### List of references

1 Aerial or satellite imagery-base, optical measuring system
   11 Digital ground system
      111 Core engine / data processing engine
         1110 Event footprint generator
            11101 Times series of measured digital satellite imagery
            11102 Time stamps or time range
         1111 Natural catastrophe event footprint - 2
            11110 Topographical maps
               111101 Geographic parameter value range
               111102 Natural event parameters
                  1111021 Locations or grid cells
                  1111022 Windspeed above earth
                  1111023 Precipitation range per time interval and/or intensity
                  1111024 Flood level
                  1111025Hale intensity and/or size
                  1111026 Air temperature and/or humidity
                  1111027 Earthquake intensity
                  1111028 Tsunami strength
            11112 Flood track footprint
            11113 Hurricane event footprint
               1111311 Hurricane track
            11114 Fire event footprint
            11115 Earthquake event footprint
            11116 Drought event footprint
            11117 Seismic sea wave / tsunami event footprint
            11118 Costal erosion event footprint
            11119 Volcanic eruption event footprint
         1112 Adaptive vulnerability curve structure -4
         1113 Impact measurands (damage measurands)
            11131 Percentual ration of damage
            11132 Impact map - 5
         1114 Loss measure
            11141 Percentual portion of loss of an object
            11142 Monetary equivalent of loss of an object
         1115 Object elements library
            11151 Digital object elements
               111511 Type of element
               111512 Material properties of element
               111513 Age of element
               111514 Wear and tear of element
               111515 Monetary equivalent value of new element
            11152 Characteristic parameters of an object element
            11153 Monetary equivalent of a certain object element
         1116 Digital representations of the objects and/or structures
            11161 Elements assembling an object
            11162 Physical damage of an object element
            11163 Total monetary equivalent of an object
         1117 Object characteristic parameters
            11171 Aggregated monetary equivalent (value)
            11172 Size
            11173 Quality index measure
            11174 Age
            11175 Type and/or composition of structure
            11176 Degree of coverage
            11177 Type of coverage
            11178 Occupancy
            11179 Optical-based deviation parameters
         1118 Database with historical data
            11181 Past natural catastrophe events
            11182 Past damage assessment parameter values
         1119 Digital image of an object
      112 Data transmission interface
      113 Persistence storage
      114 Signal generator / signaling device
      115 Object filter
   12 Airborne and/or spaceborne optical remote sensing devices (manned/ unmanned aircraft or drones or satellites or spcaecrafts)
      121 Remote airborne sensors and/or satellite sensors
         1211 Frequency band/wavelength range
            12111 Infrared to visible multi-spectral sensors
               121111 Infrared
               121112 Visible
            12112 Synthetic Aperture Radar
            12113 Hyperspectral sensors
         1212 Sensor resolution
            12121 Radiometric resolution
            12122 Spatial resolution
            12123 Spectral resolution
            12124 Temporal resolution
            12125 Spatial coverage
         1213 Threshold values
            12131 Extent of the affected area
            12132 Intensity of the natural catastrophe event
            12133 Impact strength of the natural catastrophe event
      122 Digital satellite imagery
         1221 Digital satellite files
         1221 Time stamps
         1222 Time series of digital satellite files
      123 Data transmission interface
   13 Data transmission network
   14 Identificator and locator unit
   15 Automated alarm devices / automated damage mitigation systems
   16 Aerial and/or satellite receiving station
2 Natural catastrophe event
   21 Event type
      211 Flood event
      212 Hurricane / typhoon / cyclone event
      213 Fire event
      214 Earthquake event
      215 Drought event
      216 Seismic sea wave / tsunami event
      217 Costal erosion event
      218 Volcanic eruption event
   22 Event frequency
   23 Event strength/intensity
3 Land-based objects and/or structures
   31 Object or structures type
      311 Building structures
      312 Agricultural structures
      313 Forest formations
   32 Location of the objects and/or structure -3
      321 Geographic location parameters
         3211 Degree of longitude
         3212 Degree of latitude
      322 Altitude above sea level
   33 Physical damage impacted by an occurring natural catastrophe event
   34 Elements of the object and/or structure
4 Affected geographic area
   41 Geographic area extent
   42 Topographic area extent
   43 Altitude range
   44 Geographic grid
      441 Grid cells of the geographic area

### Remote sensing process

A Energy source - electromagnetic wave source
B Interaction of energy with atmosphere (passive vs active)
C Interaction of energy with surface and land-based object/structure
D Measuring of energy by remote sensors, in particular optical sensors
E Transmitting of the digital satellite imagery to the digital ground station and monitoring by the digital satellite imagery occurring natural catastrophe events
F Preprocessing of the digital satellite imagery, generating digital natural catastrophe event footprint with the topographical map
G Matching of selected land-based objects to the generated topographical map and measuring the impact measurands for each of the selected objects in respect to the measured event intensity using the vulnerability curve structure

## Claims

1. Aerial and/or satellite imagery-based, optical method for measuring physical impacts to land-based objects and/or structures (3) by impact measurands (1113) in case of an occurrence of a natural catastrophe event (2), the natural catastrophe event (2) impacting the land-based objects and/or structures (3) causing a physical damage (32) to the land-based objects and/or structures (3), comprising capturing by remote airborne sensors (121) at least comprising infrared to visible multi-spectral sensors (12111) and/or synthetic aperture radar (12112) and/or hyperspectral sensors (12113) digital aerial and/or satellite imagery (122) of an area (4) affected by the natural catastrophe event (2) and transmitting the digital aerial and/or satellite imagery (122) to a digital ground system (11), **characterized by**
the one or more airborne and/or space-based optical remote sensing devices (12) being equipped with one or more optical remote sensors (121) having a radiometric resolution (12121) given by the optical sensor's (121) sensitivity to the magnitude of the electromagnetic energy or the optical sensor's (121) measuring color depth at least comprises 8 bit giving at least 255 brightness levels, wherein the radiometric resolution (12121) defines the resolution of the system (1) to detect differences in reflected or emitted energy, wherein spectral targets with known reflectance properties are placed in situ to calibrate the optical sensor measurements, and wherein very high spatial resolution orthophotos are generated by removing radiometric effects at least comprising vignetting and/or brightness variation from image-to-image and/or conversion to reflectance values, and geometric effects at least comprise lens distortion and/or relief displacement,
generating, by a core engine (111) of the digital ground system (11), a digital natural catastrophe event footprint (1111) of the natural catastrophe event (2) based on the captured digital aerial and/or satellite imagery (122), the natural catastrophe event footprint (1111) at least comprising a topographical map (11111) of the natural catastrophe event (2),
receiving, over a data transmission interface (112) of the digital ground system (11), location parameter values (41) defining land-based objects and/or structures (3) located in or near the area (4) affected by the natural catastrophe event (2),
matching, by the core engine (111), the received location parameter values (41) of each land-based objects and/or structure (3) to the generated topographical map (11111) by identifying land-based objects and/or structure (3) lying in the area (4) affected by the natural catastrophe event (2), if the received location parameter values (41) of a land-based objects and/or structure (3) are detected to be in a geographic parameter value range (111111) of the topographical map (11111),
parametrizing, by an adaptive vulnerability curve structure (1112), impact measurands (1113) for the land-based objects and/or structures (3) per event intensity (23) based on the measured topographical map (11111), and measuring an impact measurand (1113) value for each of one or more of the land-based objects and/or structures (3) based on an event intensity (23) measured based on the natural catastrophe event footprint (1111) using the vulnerability curve structure (1112).

2. Automated method according to claim 1, **characterized in that** the natural catastrophe event (2) at least comprises a flood event (211) and/or hurricane event (212) and/or a fire event (213) and/or an earthquake event (214) and/or a drought event (215) and/or seismic sea wave / tsunami event (216) and/or costal erosion event (217) and/or volcanic eruption event (218), the natural catastrophe event footprint (1111) at least comprises a flood event footprint (11112) and/or a hurricane event footprint (11113) and/or a fire event footprint (11114) and/or an earthquake event footprint (11115) and/or a drought event footprint (11116) and/or seismic sea wave / tsunami event (11117) and/or costal erosion event (11118) and/or volcanic eruption event (11119).

3. Automated method according to claim 1 or 2, **characterized in that** the land-based objects and/or structures and/or formations (3) at least comprise building structures (31) and/or agricultural structures (32).

4. Automated method according to one of the claims 1 to 3, **characterized by** generating, by the core engine (111), a quantified loss measure value (1114) for each of one or more of the land-based objects and/or structures (3) based on the measured impact measurands (1113) for a respective land-based objects and/or structures (3) the quantified loss measure value (1114) being given by the percentual portion of physical damage to a land-based objects and/or structures (3) weighted by the undamaged land-based objects and/or structures (3).

5. Automated method according to claim 4, **characterized by** generating, by the core engine (111), a monetary equivalent (11142) of measured quantified loss measure value (1114) of one or more of the land-based objects and/or structures (3) giving the monetary equivalent (11142) of the measured physical damage of the land-based objects and/or structures (3).

6. Automated method according to claim 5, **characterized by** assembling, by the core engine (111), digital representations (1116) of the land-based objects and/or structures (3), wherein the digital representations (1116) are composed of digital object elements (11151) stored in an object elements library (1115), and wherein the monetary equivalent (11142) of the measured physical damage of the land-based objects and/or structures (3) is generated from an aggregated monetary equivalent of the digital object elements (11151) of a land-based object and/or structure (3) in relation to the measured physical damage of the land-based object and/or structure (3).

7. Automated method according to claim 6, **characterized by** assigning and dynamically updating monetary equivalent values to each of digital object elements (11151) stored in an object elements library (1115), wherein the aggregated monetary equivalent of the digital object elements (11151) of a land-based object and/or structure (3) is dynamically generated based on the digital object elements (11151) of the object elements library (1115).

8. Automated method according to one of the claims 6 or 7, **characterized by** capturing one or more digital images (1119) of the land-based object and/or structure (3), the one or more digital images (1119) automatically captured by the remote airborne sensors (121) and/or transmitted by an individual associated with the land-based object and/or structure (3) and/or captured from a database accessible via a data transmission network (13), wherein, by means of an identificator and locator unit (14), elements (34) of a land-based object and/or structure (3) are identified by data processing of the one or more digital images (1119) based on the digital elements (11151) of the object elements library (1115) and located within the land-based object and/or structure (3), and wherein the core engine (111) assembles the digital representations (1116) of the land-based objects and/or structures (3) using the digital elements (11151) identified and located within the land-based object and/or structure (3).

9. Automated method according to claim 8, **characterized by** applying automated pattern recognition to the one or more digital images (1119) by the identificator and locator unit (14) using automated pattern recognition for identifying and locating the digital elements (11151) within the land-based object and/or structure (3).

10. Automated method according to one of the claims 1 to 9, **characterized in that** the vulnerability curve (4) relates on one or more characteristic parameter values the land-based objects and/or structures (3) comprising at least aggregated monetary equivalent (11171) and/or size (11172) and/or quality (11173) and/or age (11174) and/or type of structure (11175) and/or degree of coverage (11176) and/or type of coverage (11177) and/or occupancy (11178) and/or past/historical damage assessment parameter values (11182) capturing past damages impacted by former natural catastrophe events (11181) and/or deviation parameter values (11179) capturing based on measured deviations in a data imagery of a land-based object and/or structure (3) before and after the natural catastrophe event (2).

11. Automated method according to one of the claims 1 to 10, **characterized by** receiving at least one current damage parameter value capturing physical damages resulting from the natural catastrophe event (2), wherein the vulnerability curve (1112) is calibrated based on said current damage parameter value.

12. Automated method according to claim 11, **characterized in that** said current damage parameter value is generated by matching a digital image of a land-based object and/or structure (3) prior to the occurrence of the natural catastrophe event (2) to a digital image of the land-based object and/or structure (3) after the impact by the natural catastrophe event (2) determining the damage parameter value as detected variance within that land-based object and/or structure (3).

13. Automated method according to one of the claims 1 to 12, **characterized by** extracting object and/or structure (3) location parameters from aerial and/or satellite imagery previous to the natural catastrophe event (2) and/or from existing object and/or structure (3) location data listings.

14. Automated method according to one of the claims 1 to 13, **characterized by** deriving object and/or structure (3) location parameters (32) from portfolio information of a risk-transfer system.

15. Automated method according to one of the claims 1 to 14, **characterized by** generating, by the core engine (111), normalized and/or weighted distribution maps of land-based objects and/or structures (3) identified by the location parameters (32) and potentially damaged in the area (4) affected by the natural catastrophe event (2), the normalized and/or weighted distribution maps at least comprise distribution maps of damage impact strength to land-based objects and/or structures (3) and/or normalized loss distribution.

16. Automated method according to one of the claims 1 to 15, **characterized by** generating an impact measurand (1113) value for each of one or more of the land-based objects and/or structures (3) based on an event intensity (23) in real-time or quasi real-time with the occurrence of the natural catastrophe event (2), wherein the generation is automatically triggered by detecting one or more predefined threshold values (1213) measured associated with the natural catastrophe event (2) by means of the space-based or air-based optical remote sensing devices and/or satellites (12) exceeding predefined threshold values (1213), the threshold values at least comprising a predefined threshold for measuring the extent of the affected area (12131) and/or intensity of the natural catastrophe event (12132) and/or impact strength of the natural catastrophe event (12133).

17. Automated method according to one of the claims 1 to 16, **characterized by** the natural catastrophe event footprint (2) comprises a time series (11101) of measured digital aerial and/or satellite imagery (122), each digital aerial and/or satellite imagery (122) comprises an assigned measuring time stamps or time range (11102), wherein based on the time series (11101) of measured digital aerial and/or satellite imagery (122) dynamics of a propagation of the natural catastrophe event footprint (2) is measurably captured by the core engine (111).

18. Automated method according to one of the claims 1 to 17, **characterized by** generating the natural catastrophe event footprint (1111) by measuring the aerial and/or satellite imagery (122) using one or more natural event parameters (111102) for locations or grid cells (1111021) of the topographical map (11110), wherein the natural event parameters (111102) comprising measurands measuring at least windspeed (1111022) and/or precipitation range and/or intensity (1111023), flood level (1111024) and/or hale intensity and/or hale size (1111025) and/or air temperature and/or humidity (1111026) and/or earthquake intensity (1111027) and/or storm surge measure and/or avalanche strength and/or mud slide and/or tsunami strength (1111028) and/or terrain incline and/or wildfire or conflagration extent.

19. Automated method according to one of the claims 1 to 18, **characterized by** generating the natural catastrophe event footprint (1111) by measuring the aerial and/or satellite imagery (122), the natural catastrophe event footprint (1111) being based on predicted occurrence probability measures for a selected area to be affected by a future occurrence of a natural catastrophe event (2).

20. Automated method according to one of the claims 1 to 19, **characterized by** generating the impact measurands (1113) and/or loss measures (1114) representing quantified measures for an actual physical damage in case of the occurrence of the natural catastrophe event (2).

21. Automated method according to one of the claims 1 to 19, **characterized by** preprocessing the captured digital aerial and/or satellite imagery (122) for the generation of the digital natural catastrophe event footprint (1111) using at least Poincare Sphere representation and/or Van Zyl coefficient of variation and/or the Claude-Pottier and Touzi target scattering decompositions for the digital aerial and/or satellite imagery preprocessing.

22. Aerial and/or satellite imagery-based, optical sensory system (1) for measuring physical impacts to land-based objects and/or structures (3) by impact measurands (1113) in case of an occurrence of a natural catastrophe event (2), the natural catastrophe event (2) impacting the land-based objects and/or structures (3) causing a physical damage (32) to the land-based objects and/or structures (3), wherein the aerial and/or satellite imagery-based system (1) comprise one or more airborne and/or space-based optical remote sensing devices (12) at least comprising optical sensory satellites or spacecrafts and/or manned/ unmanned aircrafts or drones equipped with one or more remote airborne and/or satellite sensors (121) being within a frequency band/wavelength range (1211) at least comprising infrared to visible multi-spectral sensors (12111) and/or synthetic aperture radar (12112) and/or hyperspectral sensors (12113) for capturing digital aerial and/or satellite imagery (122) of a geographic area (4) affected by the natural catastrophe event (2) and transmitting the digital aerial and/or satellite imagery (122) to a digital ground system (11), **characterized**
**in that** the one or more airborne and/or space-based optical remote sensing devices (12) are equipped with one or more optical remote sensors (121) having a radiometric resolution (12121) given by the optical sensor's (121) sensitivity to the magnitude of the electromagnetic energy or the optical sensor's (121) measuring color depth at least with 8 bit giving at least 255 brightness levels, wherein the radiometric resolution (12121) defines the resolution of the system (1) to detect differences in reflected or emitted energy, wherein spectral targets with known reflectance properties are placed in situ to calibrate the optical sensor measurements, and wherein very high spatial resolution orthophotos are generated by removing radiometric effects at least comprising vignetting and/or brightness variation from image-to-image and/or conversion to reflectance values, and geometric effects at least comprise lens distortion and/or relief displacement,
**in that** the digital ground system (11) comprises a core engine (111) for generating a digital natural catastrophe event footprint (1111) of the natural catastrophe event (2) based on the captured digital aerial and/or satellite imagery (122), the natural catastrophe event footprint (1111) at least comprising a topographical map (11111) of the natural catastrophe event (2),
**in that** the digital ground system (11) comprises a data transmission interface (112) for receiving location parameter values (41) defining selected land-based objects and/or structures (3) located in or near the area (4) affected by the natural catastrophe event (2),
**in that** the digital ground system (11) comprises an object filter (115) for matching the received location parameter values (41) of each land-based objects and/or structure (3) to the generated topographical map (11111), wherein land-based objects and/or structure (3) are identified and filtered lying in the area (4) affected by the natural catastrophe event (2), if the received location parameter values (41) of a land-based objects and/or structure (3) are detected to be in a geographic parameter value range (111111) of the affected area (4) of the topographical map (11111), and
**in that** the core engine (111) comprises an adaptive vulnerability curve structure (1112) for parametrizing impact measurands (1113) for the land-based objects and/or structures (3) per event intensity (23) based on the measured topographical map (11111), and for generating an impact measurand (1113) value for each of one or more of the land-based objects and/or structures (3) based on an event intensity (23) measured based on the natural catastrophe event footprint (1111) using the vulnerability curve structure (1112).

23. Aerial and/or satellite imagery-based, optical sensory system (1) according to claim 22, **characterized in that** the one or more airborne and/or space-based optical remote sensing devices (12) equipped with one or more optical remote sensors (121) have a sensor resolution (1212) in a spectral band in the infrared range measuring temperature between -50°C to 50°C.

24. Aerial and/or satellite imagery-based, optical sensory system (1) according to one of the claims 22 or 23, **characterized in that** the one or more airborne and/or spaceborne optical remote sensing devices and/or optical sensory satellites (12) equipped with one or more remote satellite sensors (121) have a spatial resolution (12122) of at least 2.5m and/or at least 10m.

25. Aerial and/or satellite imagery-based, optical sensory system (1) according to one of the claims 22 to 24, **characterized in that** the one or more airborne and/or spaceborne optical remote sensing devices (12) equipped with one or more optical remote sensors (121) have a spatial resolution (12122) of at least 30x30 with 120x120 total internal reflection (TIR) and/or 30x30 with 60x60 TIR and/or greater than 15x15.

26. Aerial and/or satellite imagery-based, optical sensory system (1) according to one of the claims 22 to 25, **characterized in that** the one or more airborne and/or spaceborne optical remote sensing devices (12) equipped with one or more optical remote sensors (121) have a temporal resolution (12124) greater than 5 to 10 revisits a day.

27. Aerial and/or satellite imagery-based, optical sensory system (1) according to one of the claims 22 to 26, **characterized in that** the one or more airborne and/or spaceborne optical remote sensing devices (12) equipped with one or more optical remote sensors (121) have a spatial coverage (12125) of 100x100 km or more.

## Patentansprüche

1. Optisches Verfahren basierend auf Luft- und/oder Satellitenbildern zum Messen physischer Auswirkungen auf landgestützte Objekte und/oder Strukturen (3) durch Auswirkungsmessgrößen (1113) in dem Fall eines Eintretens eines Naturkatastrophenereignisses (2), wobei das Naturkatastrophenereignis (2), das sich auf die landgestützten Objekte und/oder Strukturen (3) auswirkt, einen physischen Schaden (32) an den landgestützten Objekten und/oder Strukturen (3) verursacht, umfassend Erfassen durch entfernte luftgestützte Sensoren (121), die mindestens Infrarot- bis sichtbare multispektrale Sensoren (12111) und/oder Radarsensoren mit synthetischer Apertur (12112) und/oder Hyperspektralsensoren (12113) umfassen, digitaler Luft- und/oder Satellitenbilder (122) eines von dem Naturkatastrophenereignis (2) betroffenen Gebiets (4) und Übertragen der digitalen Luft- und/oder Satellitenbilder (122) an ein digitales Bodensystem (11), **gekennzeichnet durch**
die eine oder mehreren luftgestützten und/oder weltraumgestützten optischen Fernerkundungsvorrichtungen (12), die mit einem oder mehreren optischen Fernsensoren (121) ausgestattet sind, die eine radiometrische Auflösung (12121) aufweisen, die gegeben ist **durch** die Empfindlichkeit des optischen Sensors (121) gegenüber der Größe der elektromagnetischen Energie oder **dadurch**, dass die Messung der Farbtiefe **durch** den optischen Sensor (121) mindestens 8 Bit umfasst, was mindestens 255 Helligkeitsstufen ergibt, wobei die radiometrische Auflösung (12121) die Auflösung des Systems (1) definiert, um Unterschiede in reflektierter oder emittierter Energie zu detektieren, wobei Spektralziele mit bekannten Reflexionseigenschaften in situ platziert werden, um die Messungen des optischen Sensors zu kalibrieren, und wobei Orthophotos mit sehr hoher räumlicher Auflösung **durch** Entfernen von radiometrischen Effekten erzeugt werden, die mindestens Vignettierung und/oder Helligkeitsvariation aus Bild-zu-Bild- und/oder Umwandlung-zu-Reflexionswerten umfassen, und geometrische Effekte mindestens eine Linsenverzerrung und/oder Reliefverschiebung umfassen,
Erzeugen, **durch** ein Kerntriebwerk (111) des digitalen Bodensystems (11), eines digitalen Naturkatastrophenereignis-Fußabdrucks (1111) des Naturkatastrophenereignisses (2) basierend auf den erfassten digitalen Luft- und/oder Satellitenbildern (122), wobei der Naturkatastrophenereignis-Fußabdruck (1111) mindestens eine topografische Karte (11111) des Naturkatastrophenereignisses (2) umfasst,
Empfangen, über eine Datenübertragungsschnittstelle (112) des digitalen Bodensystems (11), von Standortparameterwerten (41), die landgestützte Objekte und/oder Strukturen (3) definieren, die sich in oder in der Nähe des von dem Naturkatastrophenereignis (2) betroffenen Gebiets (4) befinden,
Abgleichen, **durch** das Kerntriebwerk (111), der empfangenen Standortparameterwerte (41) jedes landgestützten Objekts und/oder Struktur (3) mit der erzeugten topografischen Karte (11111) **durch** Identifizieren von landgestützten Objekten und/oder Strukturen (3), die in dem von dem Naturkatastrophenereignis (2) betroffenen Gebiet (4) liegen, wenn detektiert wird, dass die empfangenen Standortparameterwerte (41) eines landgestützten Objekts und/oder Struktur (3) in einer geographischen Reichweite des Parameterwerts (111111) der topografischen Karte (11111) liegen,
Parametrisieren, **durch** eine adaptive Verwundbarkeitskurvenstruktur (1112), von Auswirkungsmessgrößen (1113) für die landgestützten Objekte und/oder Strukturen (3) pro Ereignisintensität (23) basierend auf der gemessenen topografischen Karte (11111) und Messen eines Werts einer Auswirkungsmessgröße (1113) für jedes von einem oder mehreren der landgestützten Objekte und/oder Strukturen (3) basierend auf einer Ereignisintensität (23), die basierend auf dem Naturkatastrophenereignis-Fußabdruck (1111) gemessen wird, unter Verwendung der Verwundbarkeitskurvenstruktur (1112).

2. Automatisiertes Verfahren nach Anspruch 1, **dadurch gekennzeichnet, dass** das Naturkatastrophenereignis (2) mindestens ein Hochwasserereignis (211) und/oder Hurrikanereignis (212) und/oder ein Brandereignis (213) und/oder ein Erdbebenereignis (214) und/oder ein Dürreereignis (215) und/oder ein seismisches Meereswellen/Tsunami-Ereignis (216) und/oder ein Küstenerosionsereignis (217) und/oder ein Vulkanausbruchsereignis (218) umfasst, der Naturkatastrophenereignis-Fußabdruck (1111) mindestens einen Hochwasserereignis-Fußabdruck (11112) und/oder einen Hurrikanereignis-Fußabdruck (11113) und/oder einen Brandereignis-Fußabdruck (11114) und/oder einen Erdbebenereignis-Fußabdruck (11115) und/oder einen Dürreereignis-Fußabdruck (11116) und/oder seismisches Meereswellen/Tsunami-Ereignis (11117) und/oder Küstenerosionsereignis (11118) und/oder Vulkanausbruchsereignis (11119) umfasst.

3. Automatisiertes Verfahren nach Anspruch 1 oder 2, **dadurch gekennzeichnet, dass** die landgestützten Objekte und/oder Strukturen und/oder Formationen (3) mindestens Gebäudestrukturen (31) und/oder landwirtschaftliche Strukturen (32) umfassen.

4. Automatisiertes Verfahren nach einem der Ansprüche 1 bis 3, **gekennzeichnet durch** das Erzeugen eines quantifizierten Verlustmesswerts (1114) **durch** das Kerntriebwerk (111) für jedes von einem oder mehreren der landgestützten Objekte und/oder Strukturen (3) basierend auf den gemessenen Auswirkungsmessgrößen (1113) für jeweilige landgestützte Objekte und/oder Strukturen (3), wobei der quantifizierte Verlustmesswert (1114) **durch** den prozentualen Anteil des physischen Schadens an landgestützten Objekten und/oder Strukturen (3), **durch** die unbeschädigten landgestützten Objekten und/oder Strukturen (3) gewichtet, gegeben ist.

5. Automatisiertes Verfahren nach Anspruch 4, **gekennzeichnet durch** Erzeugen, **durch** das Kerntriebwerk (111), eines monetären Äquivalents (11142) des gemessenen quantifizierten Verlustmesswerts (1114) eines oder mehrerer der landgestützten Objekte und/oder Strukturen (3), der das monetäre Äquivalent (11142) des gemessenen physischen Schadens an den landgestützten Objekten und/oder Strukturen (3) angibt.

6. Automatisiertes Verfahren nach Anspruch 5, **gekennzeichnet durch** Zusammensetzen, **durch** das Kerntriebwerk(111), digitaler Darstellungen (1116) der landgestützten Objekte und/oder Strukturen (3), wobei die digitalen Darstellungen (1116) aus digitalen Objektelementen (11151), die in einer Objektelementbibliothek (1115) gespeichert sind, bestehen und wobei das monetäre Äquivalent (11142) des gemessenen physischen Schadens an den landgestützten Objekten und/oder Strukturen (3) aus einem aggregierten monetären Äquivalent der digitalen Objektelemente (11151) eines landgestützten Objekts und/oder Struktur (3) in Bezug auf den gemessenen physischen Schaden an dem landgestützten Objekt und/oder Struktur (3) erzeugt wird.

7. Automatisiertes Verfahren nach Anspruch 6, **gekennzeichnet durch** Zuweisen und dynamisches Aktualisieren von monetären Äquivalentwerten zu jedem der digitalen Objektelemente (11151), die in einer Objektelementbibliothek (1115) gespeichert sind, wobei das aggregierte monetäre Äquivalent der digitalen Objektelemente (11151) eines landgestützten Objekts und/oder Struktur (3) basierend auf den digitalen Objektelementen (11151) der Objektelementbibliothek (1115) dynamisch erzeugt wird.

8. Automatisiertes Verfahren nach einem der Ansprüche 6 oder 7, **gekennzeichnet durch** Erfassen eines oder mehrerer digitaler Bilder (1119) des landgestützten Objekts und/oder Struktur (3), wobei das eine oder die mehreren digitalen Bilder (1119) automatisch von den entfernten luftgestützten Sensoren (121) erfasst und/oder von einer Person übertragen werden, die mit dem landgestützten Objekt und/oder Struktur (3) assoziiert ist, und/oder aus einer Datenbank erfasst werden, die über ein Datenübertragungsnetzwerk (13) zugänglich ist, wobei mittels einer Identifikations- und Lokalisierungseinheit (14) Elemente (34) eines landgestützten Objekts und/oder Struktur (3) **durch** Datenverarbeitung des einen oder der mehreren digitalen Bilder (1119) basierend auf den digitalen Elementen (11151) der Objektelementbibliothek (1115) identifiziert werden und innerhalb des landgestützten Objekts und/oder Struktur (3) lokalisiert werden, und wobei das Kerntriebwerk (111) die digitalen Darstellungen (1116) der landgestützten Objekte und/oder Strukturen (3) unter Verwendung der identifizierten und innerhalb des landgestützten Objekts und/oder Struktur (3) lokalisierten digitalen Elemente (11151) zusammensetzt.

9. Automatisiertes Verfahren nach Anspruch 8, **gekennzeichnet durch** Anwenden automatisierter Mustererkennung an dem einen oder den mehreren digitalen Bildern (1119) **durch** die Identifikations- und Lokalisierungseinheit (14) unter Verwendung automatisierter Mustererkennung zum Identifizieren und Lokalisieren der digitalen Elemente (11151) innerhalb des landgestützten Objekts und/oder Struktur (3).

10. Automatisiertes Verfahren nach einem der Ansprüche 1 bis 9, **dadurch gekennzeichnet, dass** die Verwundbarkeitskurve (4) sich auf einen oder mehrere charakteristische Parameterwerte der landgestützten Objekte und/oder Strukturen (3) bezieht, umfassend mindestens das aggregierte monetäre Äquivalent (11171) und/oder Größe (11172) und/oder Qualität (11173) und/oder Alter (11174) und/oder Art der Struktur (11175) und/oder Abdeckungsgrad (11176) und/oder Abdeckungsart (11177) und/oder Belegung (11178) und/oder vergangene/historische Schadensbeurteilungsparameterwerte (11182), die vergangene Schäden, die durch frühere Naturkatastrophenereignisse (11181) entstanden sind, erfassen, und/oder Abweichungsparameterwerte (11179), die basierend auf gemessenen Abweichungen in einer Datenabbildung von einem landgestützten Objekt und/oder Struktur (3) vor und nach dem Naturkatastrophenereignis (2) erfassen.

11. Automatisiertes Verfahren nach einem der Ansprüche 1 bis 10, **gekennzeichnet durch** Empfangen mindestens eines aktuellen Schadensparameterwerts, der physische Schäden erfasst, die sich aus dem Naturkatastrophenereignis (2) ergeben, wobei die Verwundbarkeitskurve (1112) basierend auf dem aktuellen Schadensparameterwert kalibriert wird.

12. Automatisiertes Verfahren nach Anspruch 11, **dadurch gekennzeichnet, dass** der aktuelle Schadensparameterwert durch Abgleichen eines digitalen Bilds eines landgestützten Objekts und/oder Struktur (3) vor dem Eintreten des Naturkatastrophenereignisses (2) mit einem digitalen Bild des landgestützten Objekts und/oder Struktur (3) nach der Auswirkung des Naturkatastrophenereignisses (2) erzeugt wird, wobei der Schadensparameterwert als detektierte Varianz innerhalb dieses landgestützten Objekts und/oder Struktur (3) bestimmt wird.

13. Automatisiertes Verfahren nach einem der Ansprüche 1 bis 12, **gekennzeichnet durch** Extrahieren von Standortparametern des Objekts und/oder der Struktur (3) aus Luft- und/oder Satellitenbildern vor dem Naturkatastrophenereignis (2) und/oder aus bestehenden Standortdatenauflistungen des Objekts und/oder der Struktur (3).

14. Automatisiertes Verfahren nach einem der Ansprüche 1 bis 13, **gekennzeichnet durch** Ableiten von Standortparametern (32) des Objekts und/oder der Struktur (3) aus Portfolio-Informationen eines Risikotransfersystems.

15. Automatisiertes Verfahren nach einem der Ansprüche 1 bis 14, **gekennzeichnet durch** Erzeugen, **durch** das Kerntriebwerk (111), normalisierter und/oder gewichteter Verteilungskarten von landgestützten Objekten und/oder Strukturen (3), die **durch** die Standortparameter (32) identifiziert werden und in dem von dem Naturkatastrophenereignis (2) betroffenen Gebiet (4) möglicherweise beschädigt wurden, wobei die normalisierten und/oder gewichteten Verteilungskarten mindestens Verteilungskarten der Schadensauswirkungsstärke auf landgestützte Objekte und/oder Strukturen (3) und/oder normalisierte Verlustverteilung umfassen.

16. Automatisiertes Verfahren nach einem der Ansprüche 1 bis 15, **gekennzeichnet durch** Erzeugen eines Werts einer Auswirkungsmessgröße (1113) für jedes von einem oder mehreren der landgestützten Objekte und/oder Strukturen (3) basierend auf einer Ereignisintensität (23) in Echtzeit oder Quasi-Echtzeit mit dem Eintreten des Naturkatastrophenereignisses (2), wobei die Erzeugung automatisch ausgelöst wird **durch** Detektieren eines oder mehrerer vordefinierter Schwellenwerte (1213), die in Verbindung mit dem Naturkatastrophenereignis (2) mittels der weltraumgestützten oder luftgestützten optischen Fernerkundungsvorrichtungen und/oder Satelliten (12) gemessen werden, die vordefinierte Schwellenwerte (1213) überschreiten, wobei die Schwellenwerte mindestens eine vordefinierte Schwelle zum Messen der Ausdehnung des betroffenen Gebiets (12131) und/oder Intensität des Naturkatastrophenereignisses (12132) und/oder Auswirkungsstärke des Naturkatastrophenereignisses (12133) umfassen.

17. Automatisiertes Verfahren nach einem der Ansprüche 1 bis 16, **dadurch gekennzeichnet, dass** der Naturkatastrophenereignis-Fußabdruck (2) eine Zeitreihe (11101) gemessener digitaler Luft- und/oder Satellitenbilder (122) umfasst, wobei jedes digitale Luft- und/oder Satellitenbild (122) einen zugewiesenen Messzeitstempel oder Zeitbereich (11102) umfasst, wobei basierend auf der Zeitreihe (11101) gemessener digitaler Luft- und/oder Satellitenbilder (122) eine Dynamik einer Ausbreitung des Naturkatastrophenereignis-Fußabdrucks (2) von dem Kerntriebwerk (111) messbar erfasst wird.

18. Automatisiertes Verfahren nach einem der Ansprüche 1 bis 17, **gekennzeichnet durch** Erzeugen des Naturkatastrophenereignis-Fußabdrucks (1111) **durch** Messen der Luft- und/oder Satellitenbilder (122) unter Verwendung eines oder mehrerer Naturereignis-Parameter (111102) für Standorte oder Gitterzellen (1111021) der topografischen Karte (11110), wobei die Naturereignis-Parameter (111102) Messgrößen umfassen, die mindestens Windgeschwindigkeit (1111022) und/oder Niederschlagsmenge und/oder -intensität (1111023), Hochwasserpegel (1111024) und/oder Hagelintensität und/oder Hagelgröße (1111025) und/oder Lufttemperatur und/oder Luftfeuchtigkeit (1111026) und/oder Erdbebenintensität und/oder Sturmflutstärke und/oder Lawinenstärke und/oder Schlammlawinenstärke und/oder Tsunamistärke (1111028) und/oder Geländeneigung und/oder Waldbrand- oder Flächenbrandausmaß messen.

19. Automatisiertes Verfahren nach einem der Ansprüche 1 bis 18, **gekennzeichnet durch** Erzeugen des Naturkatastrophenereignis-Fußabdrucks (1111) **durch** Messen der Luft- und/oder Satellitenbilder (122), wobei der Naturkatastrophenereignis-Fußabdruck (1111) auf vorhergesagten Auftrittswahrscheinlichkeitsmessungen für ein ausgewähltes Gebiet, das von einem zukünftigen Auftreten eines Naturkatastrophenereignisses (2) betroffen sein soll, basiert ist.

20. Automatisiertes Verfahren nach einem der Ansprüche 1 bis 19, **gekennzeichnet durch** Erzeugen der Auswirkungsmessgrößen (1113) und/oder Verlustmessungen (1114), die quantifizierte Messungen für einen tatsächlichen physischen Schaden in dem Fall des Eintretens des Naturkatastrophenereignisses (2) darstellen.

21. Automatisiertes Verfahren nach einem der Ansprüche 1 bis 19, **gekennzeichnet durch** Vorverarbeiten der erfassten digitalen Luft- und/oder Satellitenbilder (122) für die Erzeugung des digitalen Naturkatastrophenereignis-Fußabdrucks (1111) unter Verwendung mindestens der Poincare-Sphären-Darstellung und/oder Van-Zyl-Variationskoeffizienten und/oder der Claude-Pottier- und Touzi-Zielstreuungszerlegungen für die Vorverarbeitung der digitalen Luft- und/oder Satellitenbilder.

22. Optisches Sensorsystem (1) basierend auf Luft- und/oder Satellitenbildern zum Messen physischer Auswirkungen auf landgestützte Objekte und/oder Strukturen (3) durch Auswirkungsmessgrößen (1113) in dem Fall eines Eintretens eines Naturkatastrophenereignisses (2) wobei das Naturkatastrophenereignis (2), das sich auf die landgestützten Objekte und/oder Strukturen (3) auswirkt, einen physischen Schaden (32) an den landgestützte Objekten und/oder Strukturen (3) verursacht, wobei das luft- und/oder satellitenbildbasierte System (1) eine oder mehrere luftgestützte und/oder weltraumgestützte optische Fernerkundungsvorrichtungen (12) umfasst, die mindestens optische Sensorsatelliten oder Raumfahrzeuge und/oder bemannte/unbemannte Luftfahrzeuge oder Drohnen umfassen, die mit einem oder mehreren entfernten luftgestützten und/oder Satellitensensoren (121) ausgestattet sind, die innerhalb eines Frequenzbands/Wellenlängenbereichs (1211) sind, die mindestens Infrarot- bis sichtbare multispektrale Sensoren (12111) und/oder Radarsensoren mit synthetischer Apertur (12112) und/oder Hyperspektralsensoren (12113) zum Erfassen digitaler Luft- und/oder Satellitenbilder (122) eines von dem Naturkatastrophenereignis (2) betroffenen geographischen Gebiets (4) und Übertragen der digitalen Luft- und/oder Satellitenbilder (122) an ein digitales Bodensystem (11) umfassen, **dadurch gekennzeichnet**
**dass** die eine oder mehreren luftgestützten und/oder weltraumgestützten optischen Fernerkundungsvorrichtungen (12) mit einem oder mehreren optischen Fernsensoren (121) ausgestattet sind, die eine radiometrische Auflösung (12121) aufweisen, die durch die Empfindlichkeit des optischen Sensors (121) gegenüber der Größe von der elektromagnetischen Energie oder durch die Messung der Farbtiefe durch den optischen Sensor (121) mit mindestens 8 Bit gegeben ist, was mindestens 255 Helligkeitsstufen ergibt, wobei die radiometrische Auflösung (12121) die Auflösung des Systems (1) definiert, um Unterschiede in reflektierter oder emittierter Energie zu detektieren, wobei Spektralziele mit bekannten Reflexionseigenschaften in situ platziert werden, um die Messungen des optischen Sensors zu kalibrieren, und wobei Orthophotos mit sehr hoher räumlicher Auflösung durch Entfernen von radiometrischen Effekten erzeugt werden, die mindestens Vignettierung und/oder Helligkeitsvariation aus Bild-zu-Bild- und/oder Umwandlung-zu-Reflexionswerten umfassen, und geometrische Effekte mindestens eine Linsenverzerrung und/oder Reliefverschiebung umfassen,
**dass** das digitale Bodensystem (11) ein Kerntriebwerk (111) zum Erzeugen eines digitalen Naturkatastrophenereignis-Fußabdrucks (1111) des Naturkatastrophenereignisses (2) basierend auf den erfassten digitalen Luft- und/oder Satellitenbildern (122) umfasst, wobei der Naturkatastrophenereignis-Fußabdruck (1111) mindestens eine topografische Karte (11111) des Naturkatastrophenereignisses (2) umfasst,
**dass** das digitale Bodensystem (11) eine Datenübertragungsschnittstelle (112) zum Empfangen von Standortparameterwerten (41) umfasst, die ausgewählte landgestützte Objekte und/oder Strukturen (3) definieren, die sich in oder in der Nähe des von dem Naturkatastrophenereignis (2) betroffenen Gebiets (4) befinden,
**dass** das digitale Bodensystem (11) ein Objektfilter (115) zum Abgleichen der empfangenen Standortparameterwerte (41) jedes landgestützten Objekts und/oder Struktur (3) mit der erzeugten topografischen Karte (11111) umfasst, wobei landgestützte Objekte und/oder Strukturen (3) in dem von dem Naturkatastrophenereignis (2) betroffenen Gebiet (4) liegend identifiziert und gefiltert werden, wenn detektiert wird, dass die empfangenen Standortparameterwerte (41) eines landgestützten Objekts und/oder Struktur (3) in einer geographischen Reichweite des Parameterwerts (111111) des betroffenen Gebiets (4) der topografischen Karte (11111) liegen, und
**dass** das Kerntriebwerk (111) eine adaptive Verwundbarkeitskurvenstruktur (1112) zum Parametrisieren von Auswirkungsmessgrößen (1113) für die landgestützten Objekte und/oder Strukturen (3) pro Ereignisintensität (23) basierend auf der gemessenen topografischen Karte (11111) und zum Erzeugen eines Werts einer Auswirkungsmessgröße (1113) für jedes von einem oder mehreren der landgestützten Objekte und/oder Strukturen (3) basierend auf einer Ereignisintensität (23), die basierend auf dem Naturkatastrophenereignis-Fußabdruck (1111) gemessen wird, unter Verwendung der Verwundbarkeitskurvenstruktur (1112) umfasst.

23. Optisches Sensorsystem (1) basierend auf Luft- und/oder Satellitenbildern nach Anspruch 22, **dadurch gekennzeichnet, dass** die eine oder mehreren luftgestützten und/oder weltraumgestützten optischen Fernerkundungsvorrichtungen (12), die mit einem oder mehreren optischen Fernsensoren (121) ausgestattet sind, eine Sensorauflösung (1212) in einem Spektralband im Infrarotbereich aufweisen, der eine Temperatur zwischen -50 °C bis 50 °C misst.

24. Optisches Sensorsystem (1) basierend auf Luft- und/oder Satellitenbildern nach einem der Ansprüche 22 oder 23, **dadurch gekennzeichnet, dass** die eine oder die mehreren luftgestützten und/oder weltraumgestützten optischen Fernerkundungsvorrichtungen und/oder optischen Sensorsatelliten (12), die mit einem oder mehreren Satellitenfernsensoren (121) ausgestattet sind, eine räumliche Auflösung (12122) von mindestens 2,5 m und/oder mindestens 10 m aufweisen.

25. Optisches Sensorsystem (1) basierend auf Luft- und/oder Satellitenbildern nach einem der Ansprüche 22 bis 24, **dadurch gekennzeichnet, dass** die eine oder die mehreren luftgestützten und/oder weltraumgestützten optischen Fernerkundungsvorrichtungen (12), die mit einem oder mehreren optischen Fernsensoren (121) ausgestattet sind, eine räumliche Auflösung (12122) von mindestens 30x30 mit 120x120 interner Totalreflexion (TIR) und/oder 30x30 mit 60x60 TIR und/oder mehr als 15x15 aufweisen.

26. Optisches Sensorsystem (1) basierend auf Luft- und/oder Satellitenbildern nach einem der Ansprüche 22 bis 25, **dadurch gekennzeichnet, dass** die eine oder die mehreren luftgestützten und/oder weltraumgestützten optischen Fernerkundungsvorrichtungen (12), die mit einem oder mehreren optischen Fernsensoren (121) ausgestattet sind, eine zeitliche Auflösung (12124) von mehr als 5 bis 10 Wiederholungen pro Tag aufweisen.

27. Optisches Sensorsystem (1) basierend auf Luft- und/oder Satellitenbildern nach einem der Ansprüche 22 bis 26, **dadurch gekennzeichnet, dass** die eine oder die mehreren luftgestützten und/oder weltraumgestützten optischen Fernerkundungsvorrichtungen (12), die mit einem oder mehreren optischen Fernsensoren (121) ausgestattet sind, eine räumliche Abdeckung (12125) von 100x100 km oder mehr aufweisen.

## Revendications

1. Procédé optique, basé sur des images aériennes et/ou satellitaires, pour mesurer les impacts physiques sur des objets et/ou structures terrestres (3) par des mesurandes d'impact (1113) en cas de survenue d'un évènement de catastrophe naturelle (2), l'évènement de catastrophe naturelle (2) présentant un impact sur les objets et/ou structures terrestres (3) provoquant un dommage physique (32) aux objets et/ou structures terrestres (3), comprenant la capture, par des télécapteurs aéroportés (121) comprenant au moins des capteurs multispectraux infrarouges à visibles (12111) et/ou un radar à synthèse d'ouverture (12112) et/ou des capteurs hyperspectraux (12113), d'images aériennes et/ou satellitaires numériques (122) d'une zone (4) affectée par l'évènement de catastrophe naturelle (2) et la transmission d'images aériennes et/ou satellitaires numériques (122) à un système terrestre numérique (11), **caractérisé par**
le ou les plusieurs dispositifs de télédétection optique aéroportés et/ou spatiaux (12) étant équipés d'un ou de plusieurs télécapteurs optiques (121) présentant une résolution radiométrique (12121) donnée par la sensibilité du capteur optique (121) à l'amplitude de l'énergie électromagnétique ou la profondeur de couleur de mesure du capteur optique (121) comprenant au moins 8 bits donnant au moins 255 niveaux de luminosité, dans lequel la résolution radiométrique (12121) définit la résolution du système (1) pour détecter des différences d'énergie réfléchie ou émise, dans lequel des cibles spectrales présentant des propriétés de réflectance connues sont placées in situ pour étalonner les mesures de capteur optique, et dans lequel des orthophotographies à très haute résolution spatiale sont générées en supprimant les effets radiométriques comprenant au moins le vignettage et/ou la variation de luminosité d'une image à l'autre et/ou la conversion en valeurs de réflectance, et les effets géométriques comprenant au moins la distorsion de l'objectif et/ou la déformation de dénivelée,
la génération, par un moteur de base (111) du système terrestre numérique (11), d'une empreinte numérique d'événement de catastrophe naturelle (1111) de l'événement de catastrophe naturelle (2) sur la base des images aériennes et/ou satellitaires numériques capturées (122), l'empreinte d'événement de catastrophe naturelle (1111) comprenant au moins une carte topographique (11111) de l'événement de catastrophe naturelle (2),
la réception, sur une interface de transmission de données (112) du système terrestre numérique (11), de valeurs de paramètres de localisation (41) définissant des objets et/ou structures terrestres (3) situé(e)s dans ou à proximité de la zone (4) affectée par l'événement de catastrophe naturelle (2),
la mise en correspondre, par le moteur de base (111), des valeurs de paramètres de localisation reçues (41) de chaque objet et/ou structure terrestre (3) avec la carte topographique générée (11111) en identifiant les objets et/ou structures terrestres (3) se trouvant dans la zone (4) affectée par l'événement de catastrophe naturelle (2), si les valeurs de paramètres de localisation reçues (41) d'un objet et/ou structure terrestre (3) sont détectées comme étant dans une plage de valeurs de paramètres géographiques (111111) de la carte topographique (11111),
le paramétrage, par une structure de courbe de vulnérabilité adaptative (1112), de mesurandes d'impact (1113) pour les objets et/ou structures terrestres (3) par intensité d'événement (23) sur la base de la carte topographique mesurée (11111), et la mesure d'une valeur de mesurande d'impact (1113) pour chacun d'un ou de plusieurs des objets et/ou structures terrestres (3) sur la base d'une intensité d'événement (23) mesurée sur la base de l'empreinte d'événement de catastrophe naturelle (1111) à l'aide de la structure de courbe de vulnérabilité (1112).

2. Procédé automatisé selon la revendication 1, **caractérisé en ce que** l'événement de catastrophe naturelle (2) comprend au moins un évènement d'inondation (211) et/ou un évènement d'ouragan (212) et/ou un évènement d'incendie (213) et/ou un évènement de tremblement de terre (214) et/ou un évènement de sécheresse (215) et/ou un évènement de vague sismique océanique/tsunami (216) et/ou un évènement d'érosion côtière (217) et/ou un évènement d'éruption volcanique (218), l'empreinte d'événement de catastrophe naturelle (1111) comprend au moins une empreinte d'évènement d'inondation (11112) et/ou une empreinte d'évènement d'ouragan (11113) et/ou une empreinte d'évènement d'incendie (11114) et/ou une empreinte d'évènement de tremblement de terre (11115) et/ou une empreinte d'évènement de sécheresse (11116) et/ou une empreinte d'évènement de vague sismique océanique/tsunami (11117) et/ou une empreinte d'évènement d'érosion côtière (11118) et/ou une empreinte d'évènement d'éruption volcanique (11119).

3. Procédé automatisé selon la revendication 1 ou 2, **caractérisé en ce que** les objets et/ou structures et/ou formations terrestres (3) comprennent au moins des structures de bâtiment (31) et/ou des structures agricoles (32).

4. Procédé automatisé selon l'une des revendications 1 à 3, **caractérisé par** la génération, par le moteur de base (111), d'une valeur de mesure de perte quantifiée (1114) pour chacun d'un ou de plusieurs des objets et/ou structures terrestres (3) sur la base des mesurandes d'impact mesurées (1113) pour un objet et/ou une structure terrestre respectif/respective (3), la valeur de mesure de perte quantifiée (1114) étant donnée par la partie en pourcentage de dommage physique causé à un objet et/ou une structure terrestre (3) pondéré(e) par les objets et/ou structures terrestres non endommagé(e)s (3).

5. Procédé automatisé selon la revendication 4, **caractérisé par** la génération, par le moteur de base (111), d'un équivalent monétaire (11142) de valeur de mesure de perte quantifiée mesurée (1114) d'un ou de plusieurs des objets et/ou structures terrestres (3) donnant l'équivalent monétaire (11142) du dommage physique mesuré des objets et/ou structures terrestres (3).

6. Procédé automatisé selon la revendication 5, **caractérisé par** l'assemblage, par le moteur de base (111), de représentations numériques (1116) des objets et/ou structures terrestres (3), dans lequel les représentations numériques (1116) sont composées d'éléments d'objets numériques (11151) stockés dans une bibliothèque d'éléments d'objets (1115), et dans lequel l'équivalent monétaire (11142) du dommage physique mesuré des objets et/ou structures terrestres (3) est généré à partir d'un équivalent monétaire agrégé des éléments d'objets numériques (11151) d'un objet et/ou d'une structure terrestre (3) par rapport au dommage physique mesuré de l'objet et/ou de la structure terrestre (3).

7. Procédé automatisé selon la revendication 6, **caractérisé par** l'attribution et la mise à jour dynamique de valeurs d'équivalent monétaire à chacun des éléments d'objets numériques (11151) stockés dans une bibliothèque d'éléments d'objets (1115), dans lequel l'équivalent monétaire agrégé des éléments d'objets numériques (11151) d'un objet et/ou d'une structure terrestre (3) est généré dynamiquement sur la base des éléments d'objets numériques (11151) de la bibliothèque d'éléments d'objets (1115).

8. Procédé automatisé selon l'une des revendications 6 ou 7, **caractérisé par** la capture d'une ou de plusieurs images numériques (1119) de l'objet et/ou de la structure terrestre (3), le ou les plusieurs images numériques (1119) étant capturées automatiquement par les télécapteurs aéroportés (121) et/ou transmises par une personne associée à l'objet et/ou à la structure terrestre (3) et/ou capturées à partir d'une base de données accessible via un réseau de transmission de données (13), dans lequel, au moyen d'une unité d'identification et de localisation (14), des éléments (34) d'un objet et/ou d'une structure terrestre (3) sont identifiés par traitement de données de la ou des plusieurs images numériques (1119) sur la base des éléments numériques (11151) de la bibliothèque d'éléments d'objets (1115) et localisés dans l'objet et/ou la structure terrestre (3), et dans lequel le moteur de base (111) assemble les représentations numériques (1116) des objets et/ou structures terrestres (3) à l'aide des éléments numériques (11151) identifiés et localisés dans l'objet et/ou la structure terrestre (3).

9. Procédé automatisé selon la revendication 8, **caractérisé par** l'application d'une reconnaissance automatique des formes à la ou aux plusieurs images numériques (1119) par l'unité d'identification et de localisation (14) à l'aide d'une reconnaissance automatique des formes pour identifier et localiser les éléments numériques (11151) dans l'objet et/ou la structure terrestre (3).

10. Procédé automatisé selon l'une des revendications 1 à 9, **caractérisé en ce que** la courbe de vulnérabilité (4) se rapporte à une ou plusieurs valeurs de paramètres caractéristiques des objets et/ou structures terrestres (3) comprenant au moins un équivalent monétaire agrégé (11171) et/ou une taille (11172) et/ou une qualité (11173) et/ou un âge (11174) et/ou un type de structure (11175) et/ou un degré de couverture (11176) et/ou un type de couverture (11177) et/ou une occupation (11178) et/ou des valeurs de paramètres d'évaluation de dommages passés/historiques (11182) capturant les dommages passés impactés par des événements de catastrophe naturelle antérieurs (11181) et/ou des valeurs de paramètres d'écart (11179) capturant sur la base d'écarts mesurés dans une imagerie de données d'un objet et/ou d'une structure terrestre (3) avant et après l'événement de catastrophe naturelle (2).

11. Procédé automatisé selon l'une des revendications 1 à 10, **caractérisé par** la réception d'au moins une valeur de paramètre de dommages actuels capturant les dommages physiques résultant de l'événement de catastrophe naturelle (2), dans lequel la courbe de vulnérabilité (1112) est étalonnée sur la base de ladite valeur de paramètre de dommages actuels.

12. Procédé automatisé selon la revendication 11, **caractérisé en ce que** ladite valeur de paramètre de dommages actuels est générée en faisant correspondre une image numérique d'un objet et/ou d'une structure terrestre (3) avant la survenue de l'événement de catastrophe naturelle (2) à une image numérique de l'objet et/ou de la structure terrestre (3) après l'impact par l'événement de catastrophe naturelle (2), déterminant la valeur de paramètre de dommages comme variance détectée dans cet objet et/ou cette structure terrestre (3).

13. Procédé automatisé selon l'une des revendications 1 à 12, **caractérisé par** l'extraction de paramètres de localisation d'objet et/ou de structure (3) à partir d'images aériennes et/ou satellitaires antérieures à l'événement de catastrophe naturelle (2) et/ou à partir de listes de données de localisation d'objet et/ou de structure (3) existantes.

14. Procédé automatisé selon l'une des revendications 1 à 13, **caractérisé par** la dérivation de paramètres de localisation (32) d'objet et/ou de structure (3) à partir d'informations de portefeuille d'un système de transfert de risques.

15. Procédé automatisé selon l'une des revendications 1 à 14, **caractérisé par** la génération, par le moteur de base (111), de cartes de distribution normalisées et/ou pondérées d'objets et/ou de structures terrestres (3) identifié(e)s par les paramètres de localisation (32) et potentiellement endommagé(e)s dans la zone (4) affectée par l'événement de catastrophe naturelle (2), les cartes de distribution normalisées et/ou pondérées comprennent au moins des cartes de distribution de la force d'impact de dommages sur des objets et/ou structures terrestres (3) et/ou une distribution de pertes normalisée.

16. Procédé automatisé selon l'une des revendications 1 à 15, **caractérisé par** la génération d'une valeur de mesurande d'impact (1113) pour chacun d'un ou de plusieurs des objets et/ou structures terrestres (3) sur la base d'une intensité d'événement (23) en temps réel ou temps quasi-réel avec la survenue de l'évènement de catastrophe naturelle (2), dans lequel la génération est déclenchée automatiquement par la détection d'une ou de plusieurs valeurs seuils prédéfinies (1213) mesurées en association avec l'évènement de catastrophe naturelle (2) au moyen des dispositifs et/ou satellites (12) de télédétection optique spatiaux ou aéroportés dépassant des valeurs seuils prédéfinies (1213), les valeurs seuils comprenant au moins un seuil prédéfini pour mesurer l'étendue de la zone affectée (12131) et/ou l'intensité de l'évènement de catastrophe naturelle (12132) et/ou la force d'impact de l'évènement de catastrophe naturelle (12133).

17. Procédé automatisé selon l'une des revendications 1 à 16, **caractérisé en ce que** l'empreinte d'événement de catastrophe naturelle (2) comprend une série temporelle (11101) d'images aériennes et/ou satellitaires numériques mesurées (122), chaque image aérienne et/ou satellitaire numérique (122) comprend un horodatage de mesure ou une plage temporelle (11102) attribué(e), dans lequel, sur la base de la série temporelle (11101) d'images aériennes et/ou satellitaires numériques mesurées (122), la dynamique d'une propagation de l'empreinte d'événement de catastrophe naturelle (2) est capturée de manière mesurable par le moteur de base (111).

18. Procédé automatisé selon l'une des revendications 1 à 17, **caractérisé par** la génération de l'empreinte d'évènement de catastrophe naturelle (1111) par la mesure des images aériennes et/ou satellitaires (122) à l'aide d'un ou de plusieurs paramètres d'événement naturel (111102) pour des emplacements ou des cellules de grille (1111021) de la carte topographique (11110), dans lequel les paramètres d'événement naturel (111102) comprenant des mesurandes mesurant au moins la vitesse du vent (1111022) et/ou la plage et/ou l'intensité des précipitations (1111023), le niveau d'inondation (1111024) et/ou l'intensité de grêle et/ou la taille de grêle (1111025) et/ou la température et/ou l'humidité d'air (1111026) et/ou l'intensité de tremblement de terre (1111027) et/ou la mesure des ondes de tempête et/ou la force des avalanches et/ou le glissement de terrain et/ou la force d tsunami (1111028) et/ou l'inclinaison de terrain et/ou l'étendue des feux de forêt ou d'une conflagration.

19. Procédé automatisé selon l'une des revendications 1 à 18, **caractérisé par** la génération de l'empreinte d'événement de catastrophe naturelle (1111) en mesurant les images aériennes et/ou satellitaires (122), l'empreinte d'événement de catastrophe naturelle (1111) étant basée sur des mesures de probabilité de survenue prédites pour une zone sélectionnée devant être affectée par une survenue future d'un événement de catastrophe naturelle (2).

20. Procédé automatisé selon l'une des revendications 1 à 19, **caractérisé par** la génération des mesurandes d'impact (1113) et/ou des mesures de perte (1114) représentant des mesures quantifiées pour un dommage physique réel en cas de survenue de l'événement de catastrophe naturelle (2).

21. Procédé automatisé selon l'une des revendications 1 à 19, **caractérisé par** le prétraitement des images aériennes et/ou satellitaires numériques capturées (122) pour la génération de l'empreinte numérique d'événement de catastrophe naturelle (1111) à l'aide d'au moins une représentation de sphère de Poincaré et/ou d'un coefficient de variation de Van Zyl et/ou des décompositions de diffusion cible de Claude-Pottier et Touzi pour le prétraitement d'images aériennes et/ou satellitaires numériques.

22. Système sensoriel optique (1) basé sur des images aériennes et/ou satellitaires, pour mesurer les impacts physiques sur des objets et/ou structures terrestres (3) par des mesurandes d'impact (1113) en cas de survenue d'un évènement de catastrophe naturelle (2), l'évènement de catastrophe naturelle (2) présentant un impact sur les objets et/ou structures terrestres (3) provoquant un dommage physique (32) aux objets et/ou structures terrestres (3), dans lequel le système basé sur des images aériennes et/ou satellitaires (1) comprend un ou plusieurs dispositifs de télédétection optique aéroportés et/ou spatiaux (12) comprenant au moins des satellites ou engins spatiaux sensoriels optiques et/ou des aéronefs ou drones, avec ou sans pilote, équipés d'un ou de plusieurs télécapteurs aéroportés et/ou satellitaires (121) situés dans une plage de fréquences/longueurs d'onde (1211) comprenant au moins des capteurs multispectraux infrarouges à visibles (12111) et/ou un radar à synthèse d'ouverture ( 12112 ) et/ou des capteurs hyperspectraux (12113) pour capturer des images aériennes et/ou satellitaires numériques (122) d'une zone géographique (4) affectée par l'événement de catastrophe naturelle (2) et transmettre les images aériennes et/ou satellitaires numériques (122) à un système terrestre numérique (11), **caractérisé**
**en ce que** le ou les plusieurs dispositifs de télédétection optique aéroportés et/ou spatiaux (12) sont équipés d'un ou de plusieurs télécapteurs optiques (121) présentant une résolution radiométrique (12121) donnée par la sensibilité du capteur optique (121) à l'amplitude de l'énergie électromagnétique ou la profondeur de couleur de mesure du capteur optique (121) avec au moins 8 bits donnant au moins 255 niveaux de luminosité, dans lequel la résolution radiométrique (12121) définit la résolution du système (1) pour détecter des différences d'énergie réfléchie ou émise, dans lequel des cibles spectrales présentant des propriétés de réflectance connues sont placées in situ pour étalonner les mesures de capteur optique, et dans lequel des orthophotographies à très haute résolution spatiale sont générées en supprimant les effets radiométriques comprenant au moins le vignettage et/ou la variation de luminosité d'une image à l'autre et/ou la conversion en valeurs de réflectance, et les effets géométriques comprenant au moins la distorsion de l'objectif et/ou la déformation de dénivelée,
**en ce que** le système terrestre numérique (11) comprend un moteur de base (111) pour générer une empreinte numérique d'événement de catastrophe naturelle (1111) de l'événement de catastrophe naturelle (2) sur la base des images aériennes et/ou satellitaires numériques capturées (122), l'empreinte d'événement de catastrophe naturelle (1111) comprenant au moins une carte topographique (11111) de l'événement de catastrophe naturelle (2),
**en ce que** le système terrestre numérique (11) comprend une interface de transmission de données (112) pour recevoir des valeurs de paramètres de localisation (41) définissant des objets et/ou des structures terrestres sélectionné(e)s (3) situé(e)s dans ou à proximité de la zone (4) affectée par l'événement de catastrophe naturelle (2),
**en ce que** le système terrestre numérique (11) comprend un filtre d'objets (115) pour faire correspondre les valeurs de paramètres de localisation reçues (41) de chaque objet et/ou structure terrestres (3) à la carte topographique générée (11111), dans lequel les objets et/ou structures terrestres (3) sont identifié(e)s et filtré(e)s comme se trouvant dans la zone (4) affectée par l'événement de catastrophe naturelle (2), si les valeurs de paramètres de localisation reçues (41) d'un objet et/ou d'une structure terrestre (3) sont détectées comme étant dans une plage de valeurs de paramètres géographiques (111111) de la zone affectée (4) de la carte topographique (11111), et
**en ce que** le moteur de base (111) comprend une structure de courbe de vulnérabilité adaptative (1112) pour paramétrer des mesurandes d'impact (1113) pour les objets et/ou structures terrestres (3) par intensité d'événement (23) sur la base de la carte topographique mesurée (11111), et pour générer une valeur de mesurande d'impact (1113) pour chacun d'un ou de plusieurs des objets et/ou structures terrestres (3) sur la base d'une intensité d'événement (23) mesurée sur la base de l'empreinte d'événement de catastrophe naturelle (1111) à l'aide de la structure de courbe de vulnérabilité (1112).

23. Système sensoriel optique (1) basé sur des images aériennes et/ou satellitaires selon la revendication 22, **caractérisé en ce que** le ou les plusieurs dispositifs de télédétection optique aéroportés et/ou spatiaux (12) équipés d'un ou de plusieurs télécapteurs optiques (121) présentent une résolution de capteur (1212) dans une bande spectrale dans la plage infrarouge mesurant une température comprise entre -50°C et 50°C.

24. Système sensoriel optique (1) basé sur des images aériennes et/ou satellitaires selon l'une des revendications 22 ou 23, **caractérisé en ce que** le ou les plusieurs dispositifs de télédétection optique aéroportés et/ou spatiaux et/ou satellites sensoriels optiques (12) équipés d'un ou de plusieurs télécapteurs satellitaires (121) présentent une résolution spatiale (12122) d'au moins 2,5 m et/ou d'au moins 10 m.

25. Système sensoriel optique (1) basé sur des images aériennes et/ou satellitaires selon l'une des revendications 22 à 24, **caractérisé en ce que** le ou les plusieurs dispositifs de télédétection optique aéroportés et/ou spatiaux (12) équipés d'un ou de plusieurs télécapteurs optiques (121) présentent une résolution spatiale (12122) d'au moins 30x30 avec une réflexion totale interne (TIR) de 120x120 et/ou 30x30 avec une TIR de 60x60 et/ou supérieure à 15x15.

26. Système sensoriel optique (1) basé sur des images aériennes et/ou satellitaires selon l'une des revendications 22 à 25, **caractérisé en ce que** le ou les plusieurs dispositifs de télédétection optique aéroportés et/ou spatiaux (12) équipés d'un ou de plusieurs télécapteurs optiques (121) présentent une résolution temporelle (12124) supérieure à 5 à 10 revisites par jour.

27. Système sensoriel optique (1) basé sur des images aériennes et/ou satellitaires selon l'une des revendications 22 à 26, **caractérisé en ce que** le ou les plusieurs dispositifs de télédétection optique aéroportés et/ou spatiaux (12) équipés d'un ou de plusieurs télécapteurs optiques (121) présentent une couverture spatiale (12125) supérieure ou égal à 100x100 km.
